# EUROPEAN PATENT APPLICATION

(11) **EP 0 527 231 A1**
(43) Date of publication of application: **17.02.1993**
(21) Application number: 92904229.9
(22) Date of filing: 31.01.1992
(51) Int. Cl.: G02F 1/13, G02F 1/133, G02F 1/1335

(54) **OPTICAL ANISOTROPIC MATERIAL AND ITS MANUFACTURING, AND LIQUID CRYSTAL DEVICE PROVIDED THEREWITH AND ITS MANUFACTURING**

(30) Priority: 04.02.1991 JP 13269/91; 04.02.1991 JP 13270/91; 21.02.1991 JP 27250/91; 19.04.1991 JP 88380/91; 09.07.1991 JP 167970/91; 22.01.1992 JP 9536/92; 16.01.1992 JP 5943/92; 24.12.1991 JP 341341/91; 09.07.1991 JP 167971/91
(71) Applicant: SEIKO EPSON CORPORATION, Shinjuku-ku Tokyo 160 (JP)
(72) Inventor: AOKI, Kazuo 3-5, Owa 3-chome, Nagano-ken 392 (JP)
(74) Representative: Hoffmann, Eckart, Dipl.-Ing.
(86) International application number: JP9200097
(87) International publication number: WO9214180

(57) **Abstract**

The optical anisotropic material comprises an at least transparent substrate and a layer of liquid-crystalline macromolecule. The macromolecules are monoaxially oriented or twist-oriented having spiral axes in a direction perpendicular to the substrate. The method for manufacturing the optical anisotropic material includes a process of forming at least one layer of a material including liquid crystalline macromolecules on the at least transparent substrate, a process of heating the material to orient the macromolecules, and a process of thereafter cooling it rapidly. The liquid crystal device provided with the optical anisotropic material comprises at least a pair of polarizing plates, a liquid crystal display cell, and at least one layer of an optical anisotropic material including liquid-crystalline macromolecules. The optical anisotropic material is in contact with the liquid crystal display cell via an orientation film. The method for manufacturing the liquid crystal device provided with the optical anisotropic material includes a process of performing an orientation processing of at least the surface not in contact with the liquid crystal display cell, a process of forming at least one layer of the material, a process of thereafter heating the material to orient the macromolecules, and a process of cooling it rapidly.

## Description

### FIELD OF THE INVENTION

The present invention relates to liquid crystal display devices and more particularly to liquid crystal display devices that realize black and white display.

### BACKGROUND OF THE INVENTION

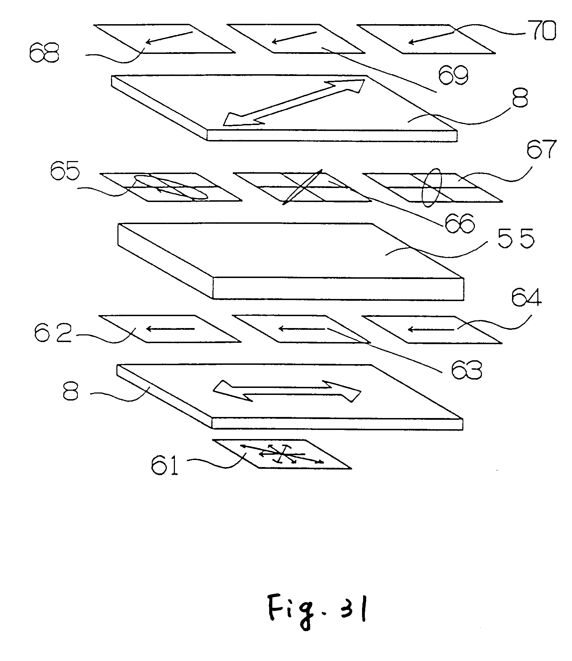

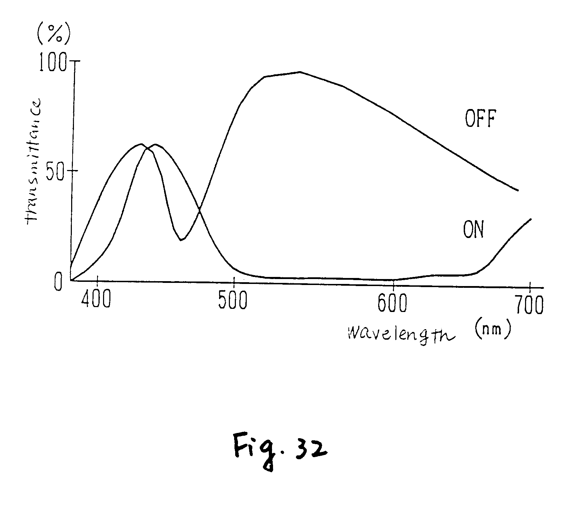

Prior art STN liquid crystal cells are colored blue or yellow by the birefringence and the rotatory polarization of the liquid crystal, thus making readability extremely poor. FIG. 31 is an explanatory diagram of the optical characteristics of a prior art STN liquid crystal device in the OFF condition. In FIG. 31, 61 is the incident light. Generally, 61 is natural light and includes all wavelengths of light in the visible spectrum, and its direction of polarization is also random. When 61 passes through a linear polarizing plate, the direction of polarization becomes a composite of the linearly polarized light 62, 63, 64, etc. Here, 62, 63 and 64 indicate polarized light with wavelengths of 450 nm, 550 nm and 650 nm, respectively. Of course, polarized light of other wavelengths is also included, but here these three wavelengths were shown as being representative since they are the wavelengths of the three colors blue, green and red. The linearly polarized light 62, 63, 64, etc., passes through the next display cell 55. The liquid crystal layer 7 in the display cell 55 has a structure made up of a twisted nematic liquid crystal that demonstrates an optical anisotropy with an optically uniaxial index of refraction. When the linearly polarized light 62, 63, 64, etc., passes through a liquid crystal layer 7 having this kind of structure, the polarization state changes. For example, the results obtained in the case of the conditions of the prior art STN liquid crystal device whose spectra are shown in FIG. 32 indicate polarization states such as 65, 66 and 67. Linearly polarized light passing through a liquid crystal layer in this manner causes wavelength dispersion of the polarization state. This polarized light 65, 66 and 67 finally passes through the linear polarizing plate 8. Only the component of the polarized light at each of the wavelengths that corresponds to the direction of the linear polarized plate 8 passes through. For example, in the case of the conditions of the prior art STN liquid crystal device whose spectra are shown in FIG. 32, each becomes similar to 68, 69 and 70. From this, you can see that the amount of light at wavelength 550 nm is great, while that at wavelengths 450 nm and 650 nm is small. Further, even in the ON condition, movement due to the electric field of the liquid crystal is only very slight and the twisted orientation of the liquid crystal in the display is retained, thus causing coloration of the light that passes through.

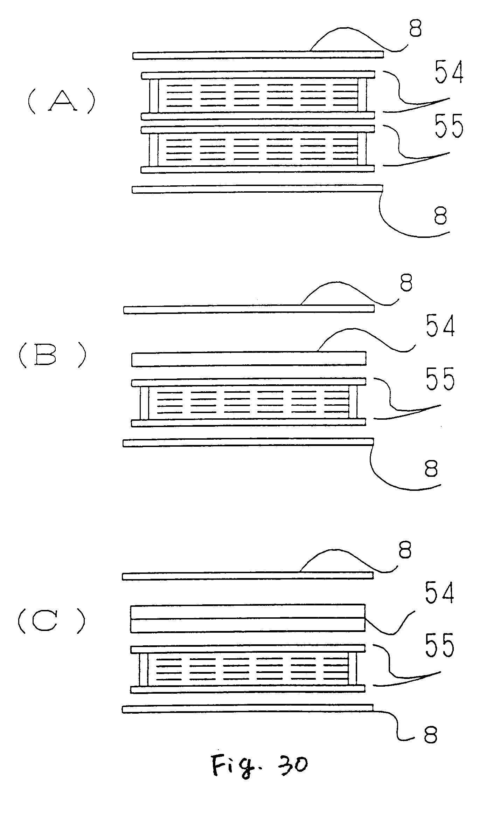

The coloration compensation mode shown in FIG. 30 was developed for the purpose of realizing black-and-white display in STN liquid crystal displays. FIG. 30 (A) is a two-layer supertwist nematic liquid crystal device capable of black-and-white display, and (B) and (C) are film compensation type liquid crystal devices. These black-and-white display-capable liquid crystal devices include polarizing plates 8, an optical anisotropic element 54 and a display cell 55 as principal components. Here, the display cell is an STN liquid crystal cell. The liquid crystal of the STN liquid crystal cell has a large twist angle of 200 to 240 degrees and a steep threshold value, thus making it applicable to increasing the capacity of simple matrix liquid crystal devices.

However, a liquid crystal cell with a twist opposite that of the display cell such as in (A) or one or two uniaxial oriented films such as in (B) or (C) are used as the optical anisotropic element in these display modes. As disclosed in Japanese Laid-Open Patent Publication 3-18164, in the case of a two-layer supertwist nematic liquid crystal device such as that shown in FIG. 30 (A), a liquid crystal cell with a twist opposite that of the display cell is required as a color compensation plate in order to achieve a black-and-white display characteristic equivalent to a low-duty ratio TN liquid crystal. When this color compensation plate is made from a liquid crystal cell, glass substrates must be used for the compensation cell, thus presenting problems with weight, thickness and production cost. However, a uniaxial oriented film such as that shown in (B) has been implemented as a substitute for this color compensation cell. This uniaxial oriented film is not sufficient for color compensation of the display cell, which is its primary purpose. That is, coloration due to the birefringence of the liquid crystal display cell is nearly completely compensated, but since the coloration effect of its rotatory polarization still remains, perfect black-and-white display cannot be obtained and color display is difficult. Further, the narrow angle of visibility also becomes a problem. A liquid crystal device (C) that employs two uniaxial oriented films has been implemented, but it cannot completely solve the problem of coloration due to the rotatory polarization of the liquid crystal display cell, its angle of visibility is narrow and the use of two films increases production cost.

In the optical phase differential plate disclosed in European Patent Application 0380338 that uses liquid crystal macromolecules having a twisted orientation, the orientation temperature of the liquid crystal macromolecular material is as high as about 200° C, and therefore the substrate material of the optical anisotropic element must be heat resistant, which presents problems in practical application.

### DISCLOSURE OF THE INVENTION

The purpose of the optical anisotropic element of the invention, the liquid crystal device equipped with the optical anisotropic element and the production method of the liquid crystal device is to greatly improve the angle of visibility and contrast over that of prior art display devices, simplify the production process of the liquid crystal device or offer a liquid crystal device that is lightweight, thin and inexpensive.

The optical anisotropic element of the invention comprises at least one transparent substrate and at least one layer of liquid crystal macromolecules having a siloxane chain, an acrylic chain or a methacrylic chain as a skeleton, wherein the liquid crystal macromolecules of the invention have a uniaxial orientation or a twisted orientation with a spiral axis in the normal direction of the substrate and a glass-transition temperature above room temperature and demonstrate a nematic phase or a twisted nematic phase.

The optical anisotropic element of the invention comprises at least one transparent substrate and at least one layer of a mixture of liquid crystal macromolecules having a siloxane chain, an acrylic chain or a methacrylic chain as a skeleton and a low molecular optically active compound, wherein the mixture of liquid crystal macromolecules and low molecular optically active compound of the invention has a uniaxial orientation or a twisted orientation with a spiral axis in the normal direction of the substrate and a glass-transition temperature above room temperature and demonstrates a nematic phase or a twisted nematic phase.

The optical anisotropic element of the invention comprises at least one transparent substrate and at least one layer of a mixture of liquid crystal macromolecules having a siloxane chain, an acrylic chain or a methacrylic chain as a skeleton and an optically active polymer having a siloxane chain, an acrylic chain or a methacrylic chain as a skeleton, wherein the mixture of liquid crystal macromolecules and optically active polymer of the invention has a twisted orientation with a spiral axis in the normal direction of the substrate and a glass-transition temperature above room temperature and demonstrates a nematic phase or a twisted nematic phase.

The liquid crystal device equipped with the optical anisotropic element of the invention comprises at least one pair of polarizing plates, and a liquid crystal display cell, a transparent substrate and an optical anisotropic element containing at least one layer of liquid crystal macromolecules having a siloxane chain, an acrylic chain or a methacrylic chain as a skeleton, all of which are sandwiched between the polarizing plates.

The liquid crystal device equipped with the optical anisotropic element of the invention comprises at least one pair of polarizing plates, a liquid crystal display cell and an optical anisotropic element containing at least one layer of liquid crystal macromolecules having a siloxane chain, an acrylic chain or a methacrylic chain as a skeleton, wherein the optical anisotropic element containing the liquid crystal macromolecules is disposed next to the liquid crystal display cell with an orientation film between them.

The liquid crystal device equipped with the optical anisotropic element of the invention comprises at least one pair of polarizing plates, a liquid crystal display cell and an optical anisotropic element containing at least one layer of liquid crystal macromolecules having a siloxane chain, an acrylic chain or a methacrylic chain as a skeleton, wherein the optical anisotropic element containing the liquid crystal macromolecules is disposed next to the liquid crystal display cell.

The production method for the optical anisotropic element of the invention comprises a process that forms at least one layer of a material containing liquid crystal macromolecules having a siloxane chain, an acrylic chain or a methacrylic chain as a skeleton on at least a transparent substrate, a process that orients the material containing the liquid crystal macromolecules by heating it, and a process that then quickly cools it.

The production method for the liquid crystal device equipped with the optical anisotropic element of the invention comprises a process that performs orientation processing on at least the surface of the liquid crystal display that does not come in contact with the liquid crystal and a process that forms at least one layer of a material containing liquid crystal macromolecules having a siloxane chain, an acrylic chain or a methacrylic chain as a skeleton, followed by a process that orients the material containing the liquid crystal macromolecules by heating it and a process that then quickly cools it.

In the liquid crystal device equipped with the optical anisotropic element of the invention and the production method for the liquid crystal device equipped with the optical anisotropic element, the angle formed by the direction of the polarization axis of the polarizing plate and the direction of the major axis of the liquid crystal molecules adjacent to it is between 30 and 60 degrees.

In the liquid crystal device equipped with the optical anisotropic element of the invention and the production method for the liquid crystal device equipped with the optical anisotropic element, the value of Δn x d for the nematic layer of the liquid crystal display cell is between 0.5 and 1.8 µm.

In the liquid crystal device equipped with the optical anisotropic element of the invention and the production method for the liquid crystal device equipped with the optical anisotropic element, the twist angle of the liquid crystal macromolecular layer contained in the optical anisotropic element is from -550 to 300 degrees.

In the liquid crystal device equipped with the optical anisotropic element of the invention and the production method for the liquid crystal device equipped with the optical anisotropic element, △n x d for the liquid crystal macromolecular layer contained in the optical anisotropic element is between 0.25 and 1.8 µm.

In the liquid crystal device equipped with the optical anisotropic element of the invention and the production method for the liquid crystal device equipped with the optical anisotropic element, the direction of orientation of the liquid crystal molecules on the surface opposing the nematic liquid crystal of the liquid crystal display cell and the liquid crystal molecular layer contained in the optical anisotropic element is nearly 90 degrees.

In the liquid crystal device equipped with the optical anisotropic element of the invention and the production method for the liquid crystal device equipped with the optical anisotropic element, the liquid crystal layer of the liquid crystal display cell is an oriented nematic phase or cholesteric phase.

In the liquid crystal device equipped with the optical anisotropic element of the invention and the production method for the liquid crystal device equipped with the optical anisotropic element, the direction of twist of the liquid crystal macromolecular layer contained in the optical anisotropic element and the direction of twist of the nematic liquid crystal of the liquid crystal display cell are opposite.

In the liquid crystal device equipped with the optical anisotropic element of the invention and the production method for the liquid crystal device equipped with the optical anisotropic element, the angle of twist and Δn x d of the liquid crystal macromolecular layer contained in the optical anisotropic element and the nematic liquid crystal of the liquid crystal display cell are nearly equal.

It is most desirable that the transparent substrate of the optical anisotropic element of the invention be one that does not demonstrate optical anisotropy due to the effect of the element's optical anisotropy. Some examples that are particularly desirable are glass, an amorphous polymeric film obtained by a casting technique, a film produced by laminating a material whose optical anisotropy is positive and a material whose optical anisotropy is negative and both which are obtained by a drawing technique, or a film produced by drawing a mixture of a material whose optical anisotropy is positive and a material whose optical anisotropy is negative.

The ideal material for use as the orientation agent of the liquid crystal macromolecular material of the invention can be selected upon consideration of the solvent resistance, heat resistance, etc., of the substrate on which it is applied. Further, it is not limited to polyimides, and any orientation agent for liquid crystal materials can be used. Neither is it restricted by its hardening temperature.

The drive system for the liquid crystal device of the invention can be a regular multiplex drive system.

It is desirable that direct rubbing of the liquid crystal cell or rubbing on top of the orientation agent be used as the orientation method of the invention, but direct rubbing of the transparent plastic substrate can also be used.

It is desirable that the phase transition series of the liquid crystal macromolecules of the invention shift to a glass condition, a nematic phase and an isotropic liquid phase. It is also desirable that the glass transition temperature be a temperature higher than the upper temperature limit of the use range of the liquid crystal device, and that the temperature of transition from the nematic phase to the isotropic liquid phase be between 100° and 150° C.

The liquid crystal macromolecules of the invention are side-chain liquid crystal macromolecules with an acrylic chain or a methacrylic chain; i.e., as long as they are liquid crystal macromolecules in which a mesogenic unit is bonded to the skeleton via an ethylene spacer with a carbon count of at least one or more, then the molecular structure is not limited by this embodiment.

It is desirable that the temperature that orients the liquid crystal macromolecules of the invention be a temperature near the temperature of transition from the nematic phase to the isotropic liquid phase of the liquid crystal macromolecule, and it should be between 30° and 250° C, or more desirably between 80° and 130° C.

It is desirable that the rate of cooling be rapid when cooling to room temperature after orientation of the liquid crystal macromolecules of the invention, but there is no particular restriction in this embodiment.

The chiral dopant added to the liquid crystal macromolecules of the invention is not restricted by this embodiment as long as it is an optically active compound containing asymmetric carbon; e.g., an R substance with a right-hand twist when the cell for liquid crystal display is a left spin liquid crystal cell or an S substance with a left-hand twist when the cell is a right spin liquid crystal cell. Experience has shown that there is no particular problem when a compound is used that distinguishes between left spin and right spin, but if the direction of twist reverses depending on the temperature or the respective directions of twist of the d-substance and 1-substance are unknown even when a compound is used that contains asymmetrical carbon, then it can be used after the direction of twist is confirmed. Two or more types can be used for pitch compensation. Also, the chiral dopant is not limited to low molecular compounds, and polymerization will not detract from the superiority of this invention. That is, when positions having asymmetrical carbon are provided in the skeleton of liquid crystal macromolecules that can be used in this invention, or when a copolymer resulting from copolymerization to which a monomer containing asymmetric carbon has been provided in advance in a process that synthesizes liquid crystal macromolecules usable in the invention demonstrates a chiral nematic phase, then that copolymer can also be used as a chiral dopant. Further, the copolymer itself can be used alone by adjusting the direction and angle of twist.

In the process that applies the liquid crystal macromolecules of the invention, it is desirable to use such techniques as roll coating, printing and spin coating, or a technique that uses a bar coater. This embodiment makes no restrictions as long as a uniform thickness can be obtained. Other methods that can be used include a method that casts from a solvent and a dipping technique.

The liquid crystal device of the invention includes at least a liquid crystal display, polarizing plates and the optical anisotropic element of the invention as its principal components. The polarization axis, direction of rubbing on the liquid crystal cell and direction of the molecular axis of the liquid crystal macromolecules are not restricted by this embodiment.

In the liquid crystal device of the invention, a color filter, a back stripe for preventing the leakage of light between electrodes, a lens for increasing the efficiency of the transmission of light by the liquid crystal cell, etc., can be employed on the transparent substrate of the liquid crystal cell.

The method of rubbing of this embodiment is not limited by the embodiment. That is, a nylon brush, cotton, berusedo or any other material that is normally used for orientation of liquid crystal macromolecules can be used in this embodiment. A fixed rubbing method is also acceptable.

After applying the liquid crystal macromolecules, which make up the optical anisotropic element, in the production method for the optical anisotropic element and liquid crystal device of the invention, it is desirable to let the liquid crystal macromolecular layer stand for a short period to allow it to become flat.

In the liquid crystal device of the invention, the polarizing plate can be attached directly on top of the optical anisotropic element.

The liquid crystal device of the invention may be configured such that the optical anisotropic element faces the liquid crystal cell or with a spacer between them so that there is no direct contact.

The liquid crystal device of the invention may be configured with a spacer between the polarizing plate and the liquid crystal macromolecules which make up the optical anisotropic element so that there is no direct contact between them.

The macromolecular material of the invention, which demonstrates liquid crystallinity, changes to an isotropic liquid phase at a temperature between 60° and 150° C, and it can be oriented at a low temperature in the range of 60° to 150° C. It is desirable that the macromolecular material of the invention, which demonstrates liquid crystallinity, specifically be a compound with a mesogenic unit as a side chain, and more specifically be a siloxane compound with a mesogenic unit as a side chain. Further, it is desirable that its molecular weight be between 1,500 and 200,000 and more desirable that it be between 1,500 and 20,000. It is desirable that the liquid crystal macromolecules used in the optical anisotropic element of the invention demonstrate a nematic phase. If the macromolecular material, which demonstrates a liquid crystallinity, of the invention does not require a twisted orientation, then a liquid crystal macromolecular material that demonstrates a nematic phase can be used alone. Further, if the skeleton of an optical anisotropic element that requires a twisted orientation contains an optically active compound, then a material that demonstrates a cholesteric phase is desirable. The liquid crystal macromolecules of the invention can be used by adding a chiral dopant added to regular liquid crystal materials having an optically active compound in their skeleton or a macromolecular material having an optically active location in their skeleton. Also, a macromolecular material having an optically active location can be used alone to achieve a twisted orientation. Embodiments 1 to 43 are not limited to macromolecular compounds that demonstrate liquid crystallinity, and the same effect can be obtained by using the compounds shown below. Of the compounds or polymers (1) to (34) shown below, at least one can be selected or two more mixed and used.

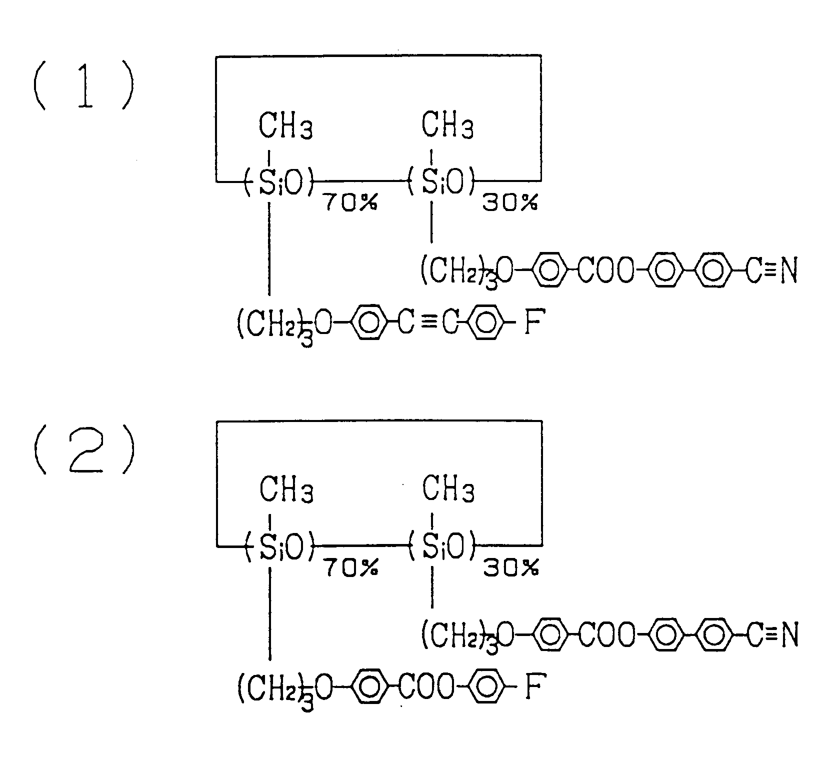

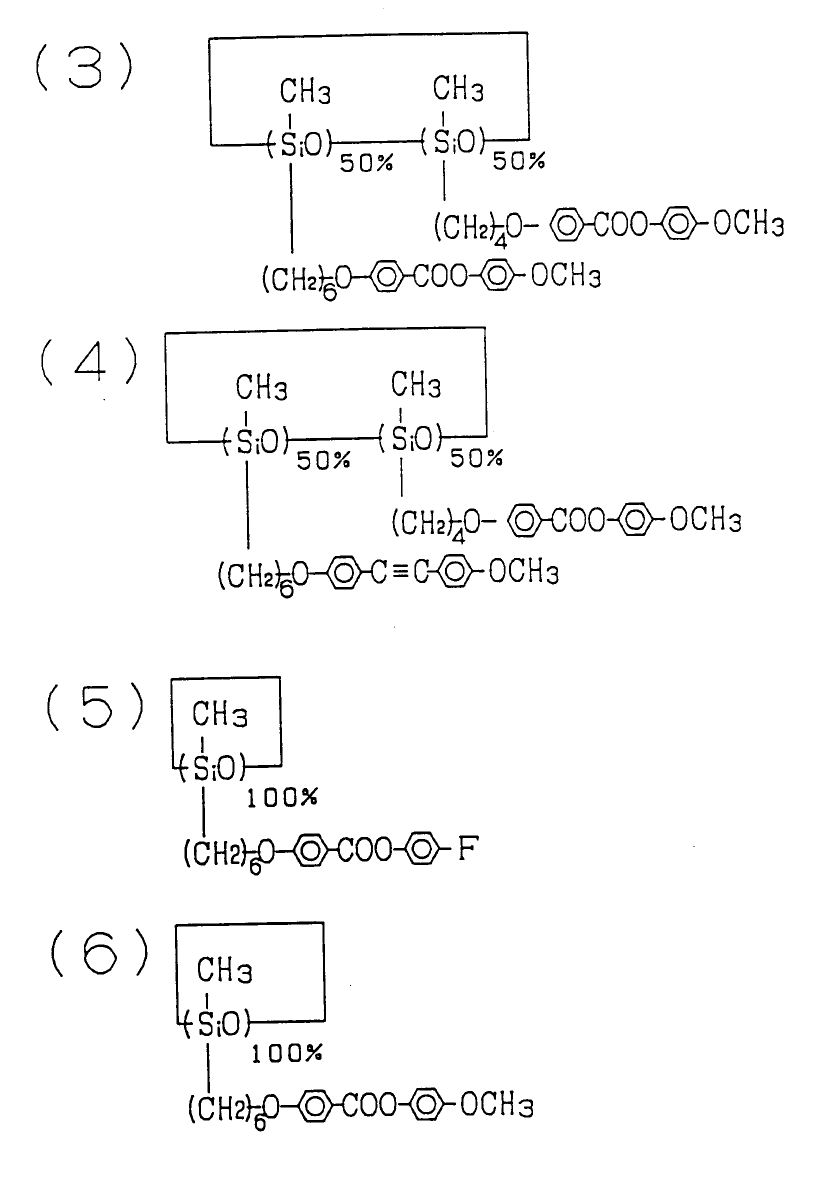

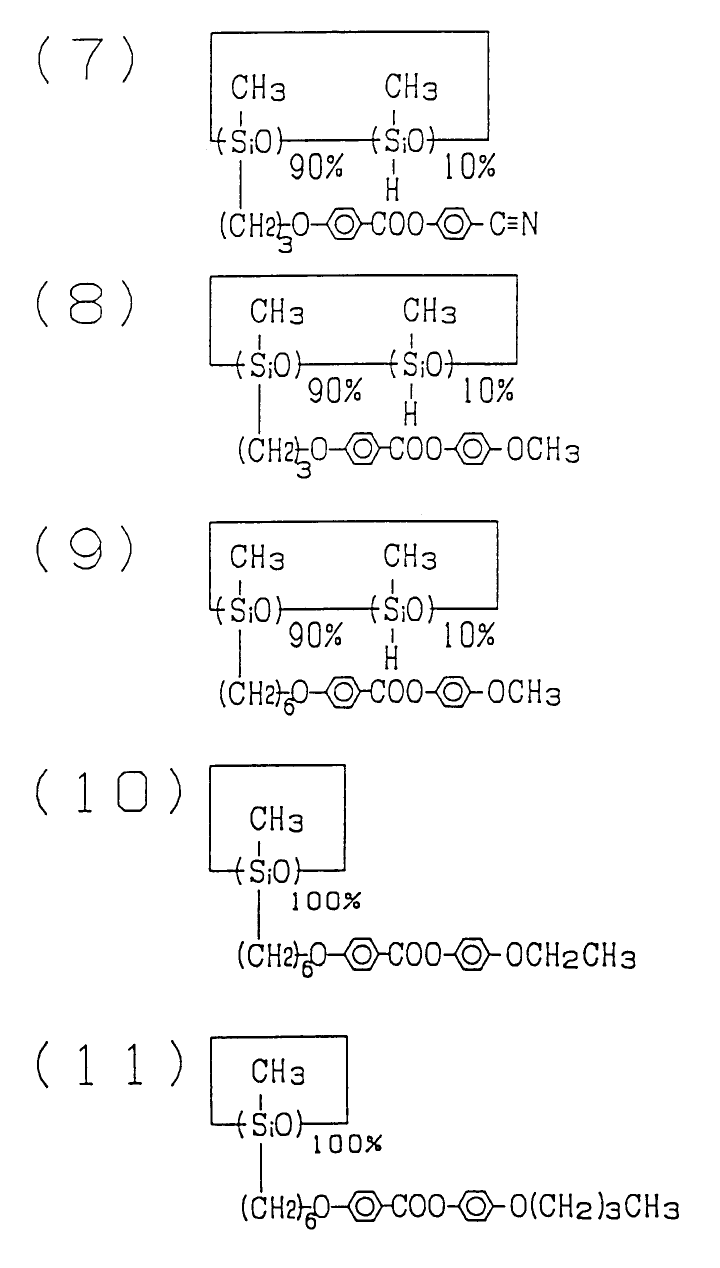

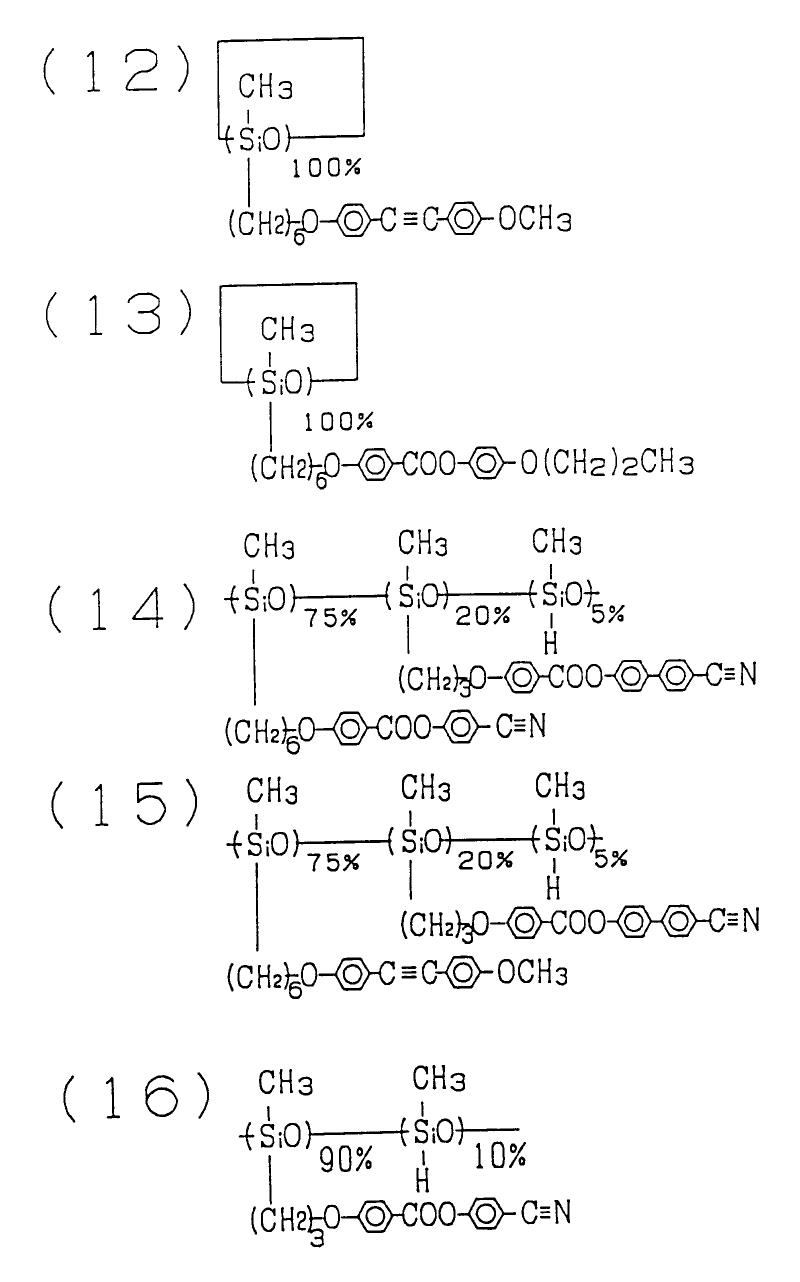

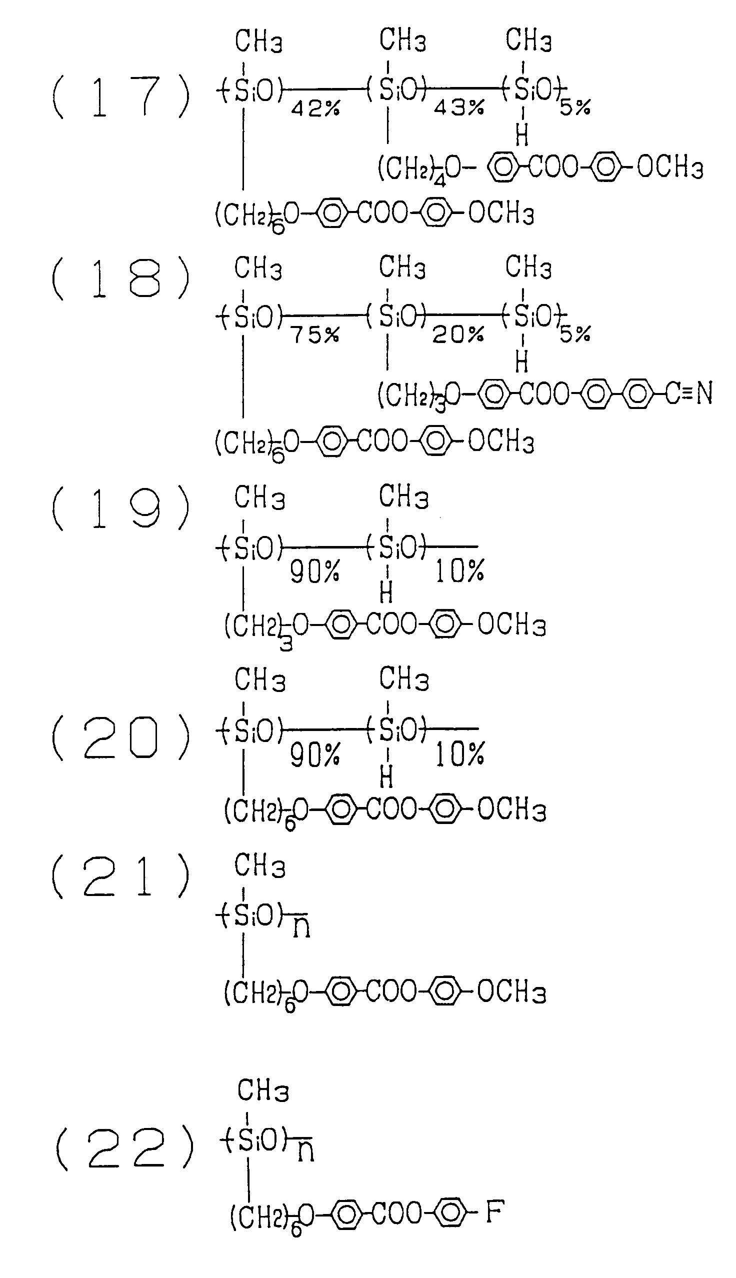

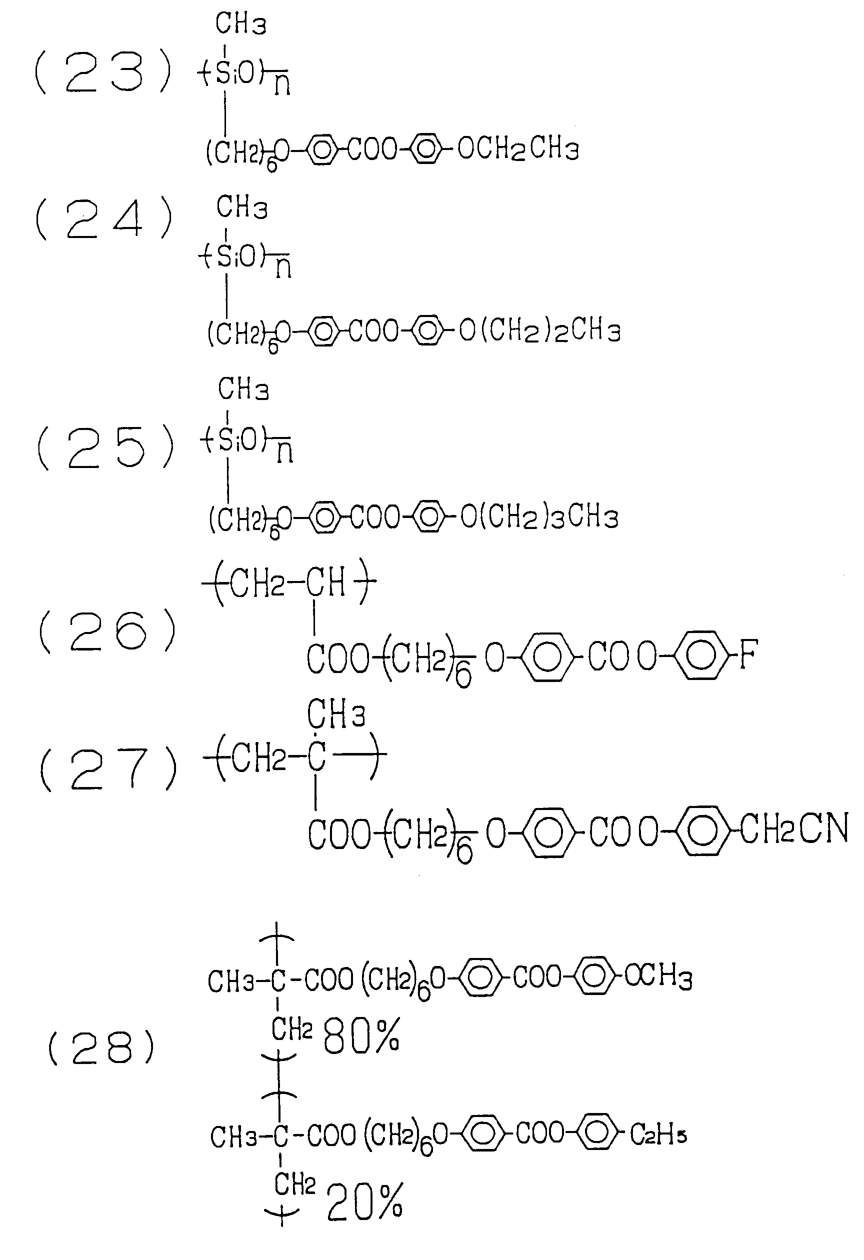

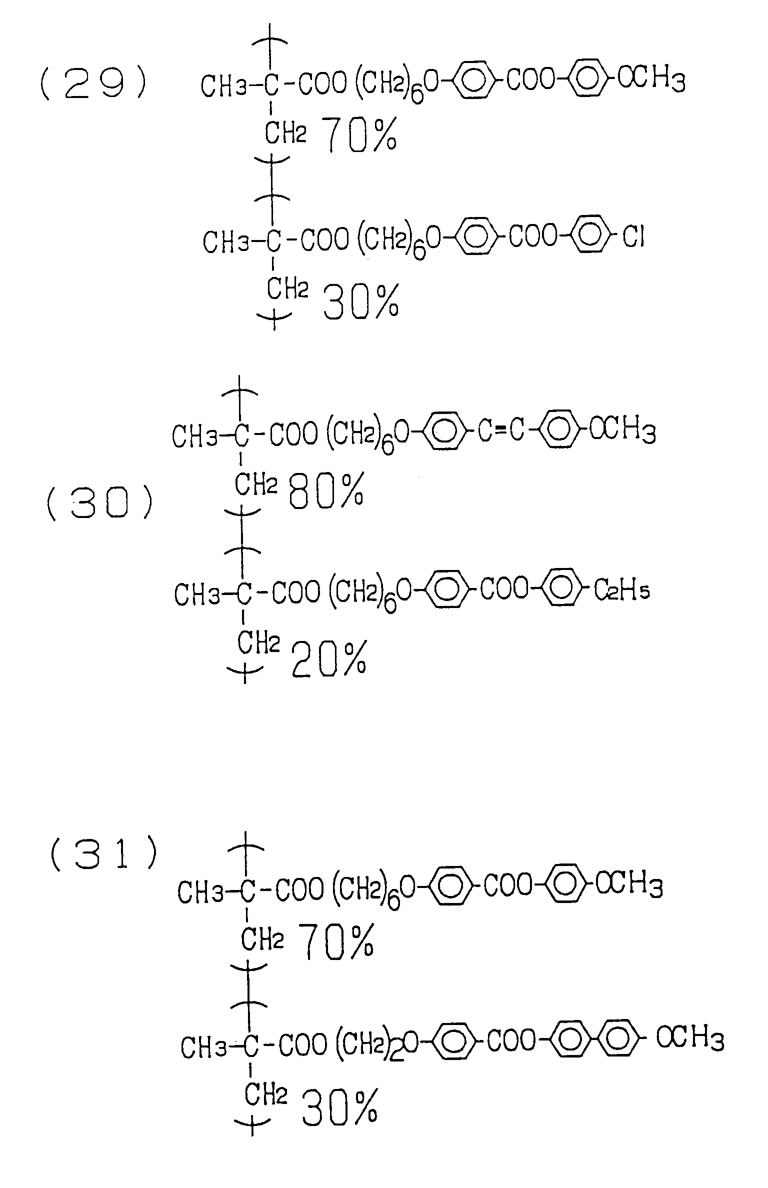

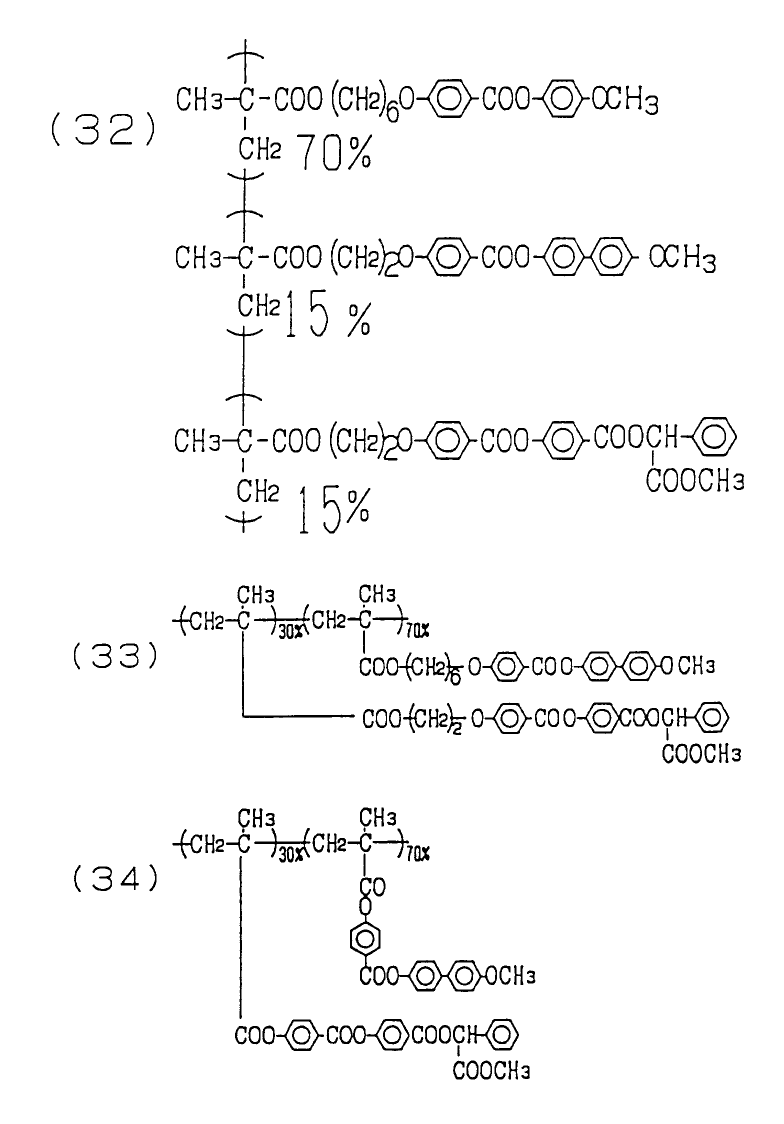

In embodiments 1 to 43 of the invention, the compounds or polymers (35) to (55) shown below can be used as compounds or polymers having an optically active location.

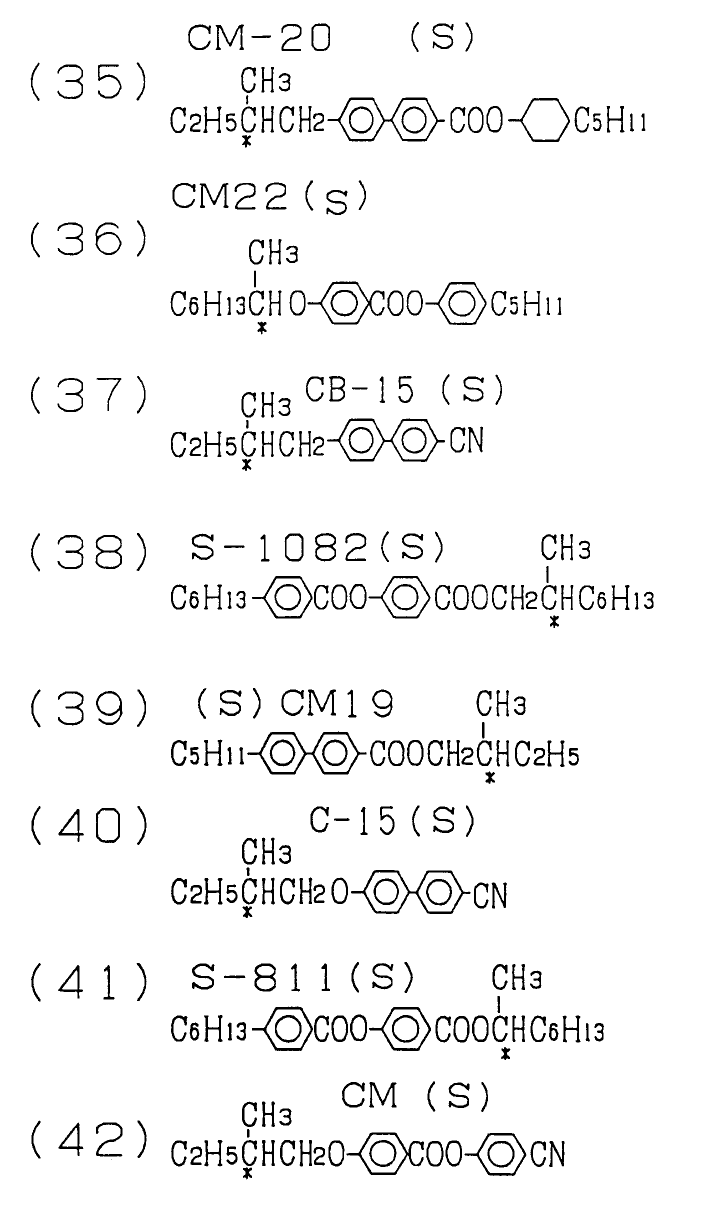

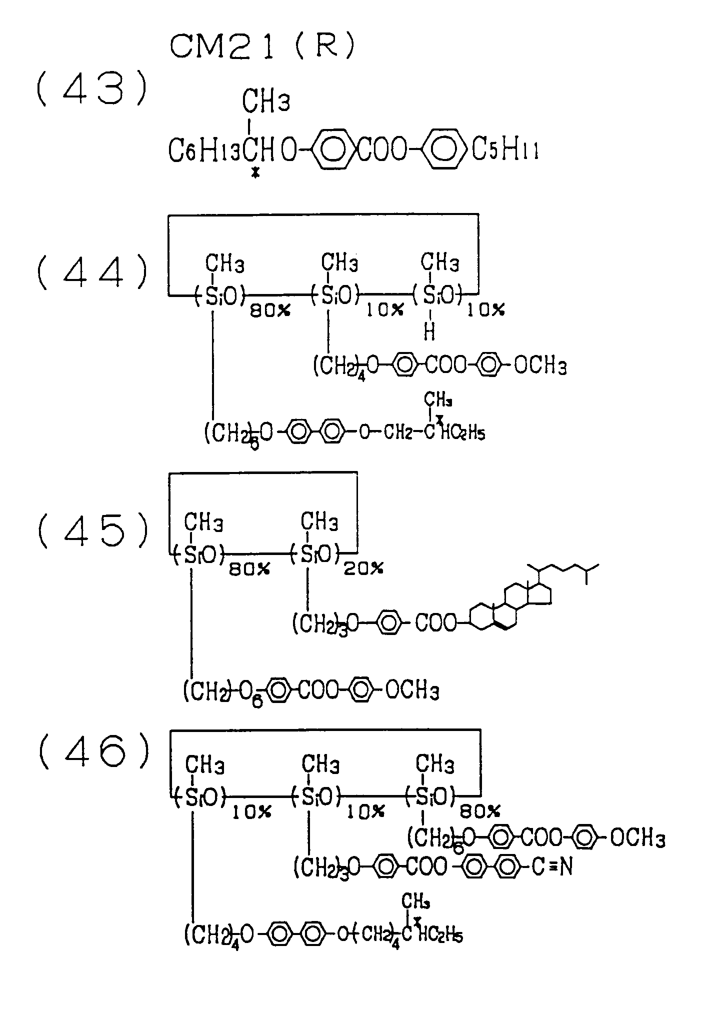

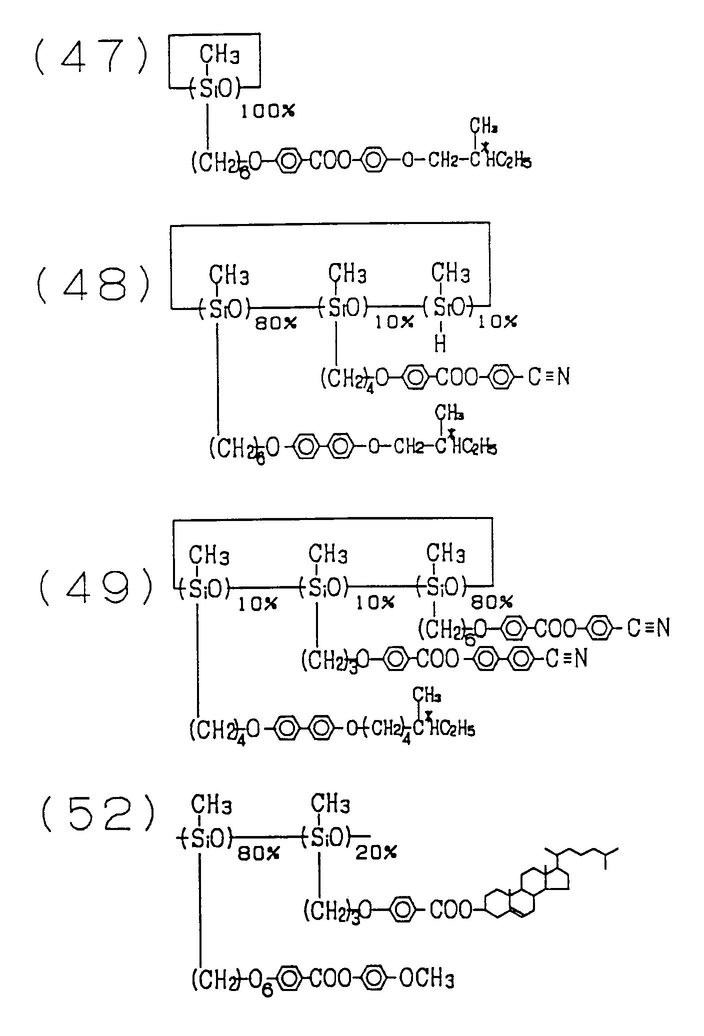

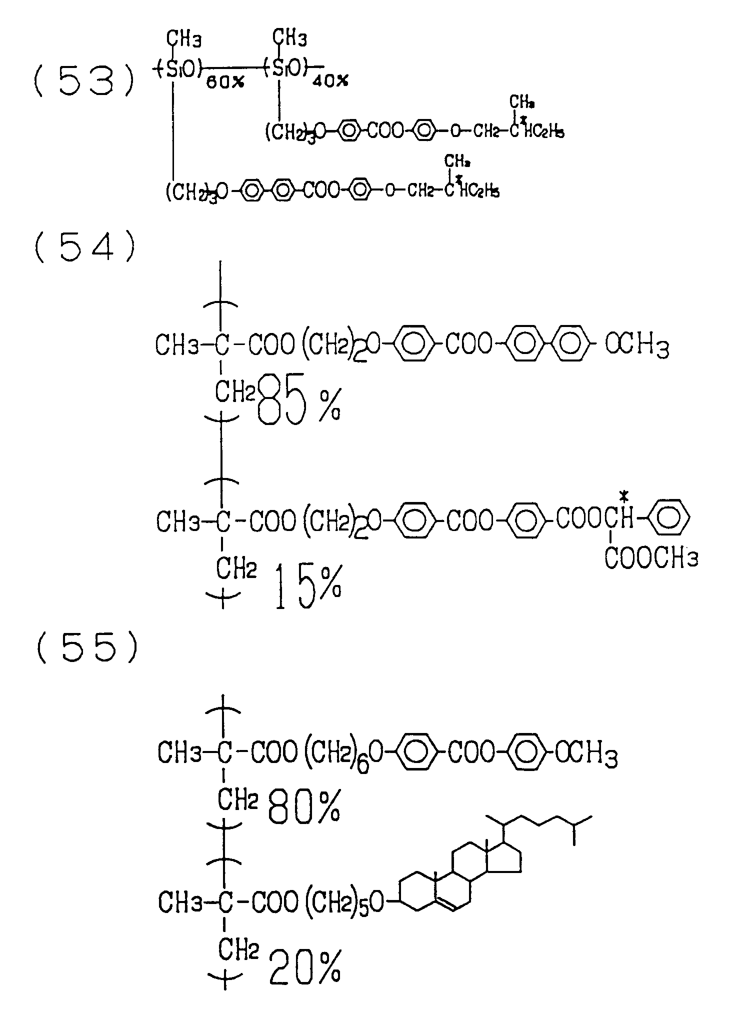

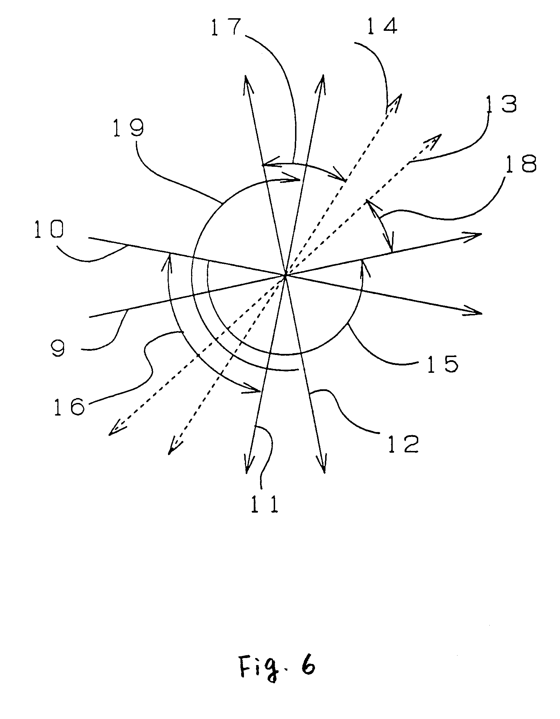

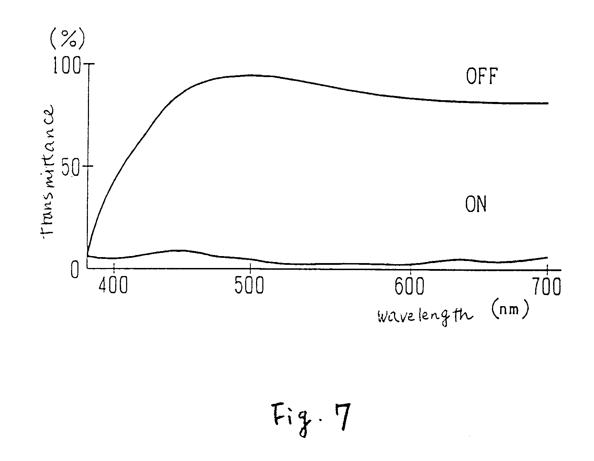

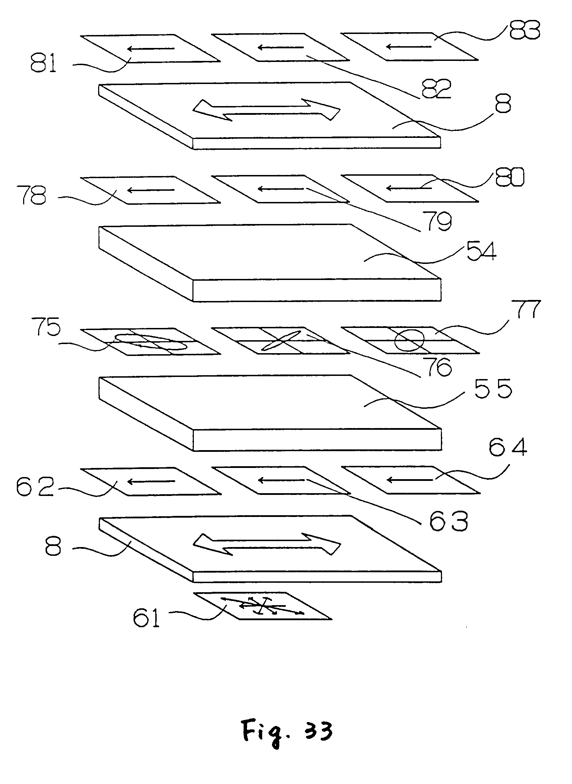

As described above, the liquid crystal device of the invention is distinguished by the use of a liquid crystal macromolecular film as the optical anisotropic element. Below is a brief explanation of coloration compensation in a liquid crystal device equipped with this optical anisotropic element. FIG. 33 is an explanatory diagram of the optical characteristics of the liquid crystal device of the invention in the OFF condition. A comparison of FIG. 31 and FIG. 33 shows that FIG. 33 differs from FIG. 31 in that the optical anisotropic element made up of a liquid crystal macromolecular film is included as a principal component. To simplify the explanation, except for the optical anisotropic element 54 and the polarizing plate 8, the conditions for a principal component are the same as the example of a prior art STN liquid crystal device shown in FIG. 31, i.e., the STN liquid crystal device whose spectra are shown in FIG. 32. Therefore, the polarization states 75, 76 and 77 of each of the wavelengths after passing through the display cell 55 in FIG. 33 are exactly the same as 65, 66 and 67 in FIG. 31. The only difference is that in the case of FIG. 33, the polarized light 75, 76 and 77 then passes through the optical anisotropic element 54. In the invention, the optical anisotropic element 54 has an action that cancels wavelength dispersion caused by the polarized light 75, 76 and 77 passing through the display cell 55. Therefore, passing the polarized light 75, 76 and 77 through the optical anisotropic element causes it to become linearly polarized light such as indicated by 78, 79 and 80, respectively, and then by passing it through a polarizing plate, it is emitted as linearly polarized light such as indicated by 81, 82, and 83, respectively. The spectra of the emitted light at this time are shown in FIG. 7. The coloration phenomenon in the OFF condition is cancelled in the liquid crystal device of the invention. Further, numerous experimental results from embodiments described below and computer simulations confirm that there is no coloration under various conditions in the ON condition as well. The conditions at this time are
(1)the values for Δnd of the display cell and for Δnd of the optical anisotropic element are nearly equal;
(2)assuming the twist angle of the display cell is Θ, then the twist angle of the optical anisotropic element is nearly -Θ; and
(3)the angle formed by the direction 11 of the optical axis of the surface opposite the display cell of the optical anisotropic element in FIG. 6 and the direction 10 of rubbing on the upper electrode substrate of the display cell is 90 degrees.

When at least the above conditions are met, the coloration phenomenon can be canceled as described above. Since improvement of these optical characteristics is the same as the optical compensation effect of the two-layer supertwist nematic liquid crystal cell disclosed in Japanese Laid-Open Patent Publication 3-18146, details are omitted here, but since the linearly polarized light that passes through one of the pair of polarizing plates passes through at least the display cell and the color compensation plate in the liquid crystal device of the invention obtained in this manner, the coloration caused by the birefringence and rotatory polarization of the STN display cell is canceled and light in the wavelength range 400 to 700 nm becomes elliptically polarized light nearly aligned in the direction of the major axis. Therefore, when it passes through the other polarizing plate, no particular wavelength range is blocked, thus resulting in the color of the light being nearly white after it has passed through the polarizing plate.

That is, in the optical anisotropic element and the production method for the optical anisotropic element, and the liquid crystal display device equipped with the optical anisotropic element and production method for the liquid crystal display device equipped with the optical anisotropic element of the invention, a liquid crystal device can be offered at low cost that does not sacrifice the contrast, angle of visibility and other display characteristics of prior art two-layer supertwist nematic liquid crystal display devices and is compact and thin.

### BRIEF DESCRIPTION OF THE DRAWINGS

- FIG. 1: is a schematic representation of a cross section of an example of the optical anisotropic element in the first embodiment of the invention;
- FIG. 2: is a schematic representation of a cross section of an example of an optical anisotropic element in the second embodiment of the invention;
- FIG. 3: is a schematic representation of a cross section of an example of an optical anisotropic element in the third embodiment of the invention;
- FIG. 4: is a schematic representation of a cross section of an example of an optical anisotropic element in the fourth embodiment of the invention;
- FIG. 5: is a schematic representation of a cross section of an example of a liquid crystal device equipped with an optical anisotropic element obtained in the first embodiment of the invention;
- FIG. 6: is a diagram showing the direction of orientation of the liquid crystal, the direction of the absorption axis of the polarizing plate and the direction of the major axis of the liquid crystal macromolecules;
- FIG. 7: is a graph showing the contrast curves of the liquid crystal device of the invention;
- FIG. 8: is a schematic representation of a cross section of an example of a liquid crystal device equipped with an optical anisotropic element obtained in the second embodiment of the invention;
- FIG. 9: is a schematic representation of a cross section of an example of a liquid crystal device equipped with an optical anisotropic element obtained in the third embodiment of the invention;
- FIG. 10: is a schematic representation of a cross section of an example of a liquid crystal device equipped with an optical anisotropic element obtained in the fourth embodiment of the invention;
- FIG. 11: is a schematic representation of a cross section of an example of a liquid crystal device equipped with an optical anisotropic element obtained in the ninth embodiment of the invention;
- FIG. 12: is a schematic representation of a cross section of an example of a liquid crystal device equipped with an optical anisotropic element obtained in the tenth embodiment of the invention;
- FIG. 13: is a schematic representation of a cross section of an example of a liquid crystal device equipped with an optical anisotropic element obtained in the eleventh embodiment of the invention;
- FIG. 14: is a schematic representation of a cross section of an example of a liquid crystal device equipped with an optical anisotropic element obtained in the twelfth embodiment of the invention;
- FIG. 15: is a schematic representation of an example of the production method for the optical anisotropic element of the first embodiment of the invention;
- FIG. 16: is a schematic representation of an example of the production method for the optical anisotropic element of the second embodiment of the invention;
- FIG. 17: is a schematic representation of an example of the production method for the optical anisotropic element of the third embodiment of the invention;
- FIG. 18: is a schematic representation of an example of the production method for the optical anisotropic element of the fourth embodiment of the invention;
- FIG. 19: is a schematic representation of an example of the production method for the optical anisotropic element of the eighteenth embodiment of the invention;
- FIG. 20: is a schematic representation of an example of the production method for the optical anisotropic element of the twentieth embodiment of the invention;
- FIG. 21: is a schematic representation of an example of the production method for a liquid crystal display device equipped with the optical anisotropic element of the twenty-fifth embodiment of the invention;
- FIG. 22: is a schematic representation of an example of the production method for a liquid crystal display device equipped with the optical anisotropic element of the thirty-first embodiment of the invention;
- FIG. 23: is a schematic representation of an example of the production method for a liquid crystal display device equipped with the optical anisotropic element of the thirty-second embodiment of the invention;
- FIG. 24: is a schematic representation of an example of the production method for a liquid crystal display device equipped with the optical anisotropic element of the thirty-third embodiment of the invention;
- FIG. 25: is a schematic representation of an example of the production method for a liquid crystal display device equipped with the optical anisotropic element of the thirty-fourth embodiment of the invention;
- FIG. 26: is a schematic representation of an example of the production method for a liquid crystal display device equipped with the optical anisotropic element of the thirty-fifth embodiment of the invention;
- FIG. 27: is a schematic representation of an example of the production method for a liquid crystal display device equipped with the optical anisotroplc element of the thirty-sixth embodiment of the invention;
- FIG. 28: is a schematic representation of an example of the production method for a liquid crystal display device equipped with the optical anisotropic element of the thirty-seventh embodiment of the invention;
- FIG. 29: is a schematic representation of an example of the production method for a liquid crystal display device equipped with the optical anisotropic element of the thirty-eighth embodiment of the invention;
- FIG. 30: is a schematic representation of a cross section of a prior art black-and-white display liquid crystal device;
- FIG. 31: is an explanatory diagram of the optical characteristics of the prior art STN liquid crystal device in the OFF condition;
- FIG. 32: is a graph showing the spectra of the prior art STN liquid crystal device;
- FIG. 33: is an explanatory diagram of the optical characteristics of the liquid crystal device of the invention in the OFF condition;
- FIG. 34: is a chart showing the contrast at the angles of visibility of the prior art STN liquid crystal device;
- FIG. 35: is a chart showing the contrast at the angles of visibility of the liquid crystal device of the invention;
- FIG. 36: is a graph showing an example of the desirable range for the liquid crystal display cell and optical anisotropic element in an embodiment of the invention;
- FIG. 37: is a graph showing an example of the desirable range for the liquid crystal display cell and optical anisotropic element in an embodiment of the invention;
- FIG. 38: is a graph showing an example of the desirable range for the liquid crystal display cell and optical anisotropic element in an embodiment of the invention;
- FIG. 39: is a graph showing an example of the desirable range for the liquid crystal display cell and optical anisotropic element in an embodiment of the invention;
- FIG. 40: is a graph showing an example of the desirable range for the liquid crystal display cell and optical anisotropic element in an embodiment of the invention; and
- FIG. 41: is a graph showing an example of the desirable range for the liquid crystal display cell and optical anisotropic element in an embodiment of the invention.

### PREFERRED CONFIGURATIONS FOR IMPLEMENTATION OF THE INVENTION

Below, embodiments of the invention are explained by referring to the accompanying figures.

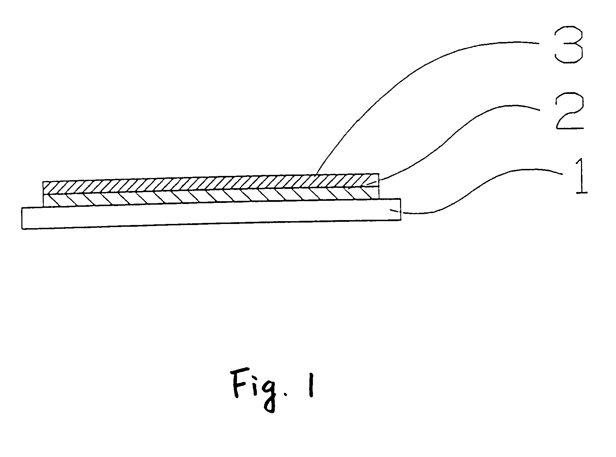

First embodiment: A schematic representation of a cross section of an example of the optical anisotropic element of the invention is shown in FIG. 1. A polyimide thin film 2 (SP740, Tore Co., Ltd.) is formed on a transparent substrate 1, and the polyimide thin film 2 on this substrate 1 is treated by rubbing in a uniaxial direction. A liquid crystal macromolecular film 3 approximately 6 µm thick and produced by adding CB-15 (37), an optically active compound produced by Merck Corporation and having an asymmetrical center, to a concentration of 5% to a 95%:5% mixture of the side-chain liquid crystal macromolecules (3) and (2) shown above, which have a siloxane chain as a skeleton and demonstrate a nematic phase, is formed on this polyimide thin film 2. This liquid crystal macromolecular film 3 has a twist orientation that is twisted 230 degrees to the right. The optical anisotropic element of the invention has an effect that compensates coloration caused by rotatory polarization and birefringence due to the twist of the liquid crystal in the STN liquid crystal cell, thus realizing a liquid crystal device with high contrast and high visibility.

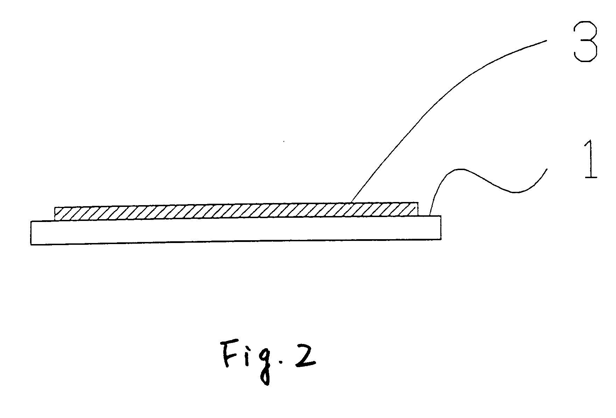

Second embodiment: A schematic representation of a cross section of an example of the optical anisotropic element of the invention is shown in FIG. 2. The top of the transparent substrate 1 is treated by rubbing in a uniaxial direction. A liquid crystal macromolecular film 3 approximately 6 µm thick and produced by adding CB-15 (37), an optically active compound produced by Merck Corporation and having an asymmetrical center, to a concentration of 5% to a 95%:5% mixture of the side-chain liquid crystal macromolecules (3) and (2) shown above, which have a siloxane chain as a skeleton and demonstrate a nematic phase, is formed on this transparent substrate 1. This liquid crystal macromolecular film 3 has a twist orientation that is twisted 230 degrees to the right. The optical anisotropic element of the invention has an effect that compensates coloration caused by rotatory polarization and birefringence due to the twist of the liquid crystal in the STN liquid crystal cell, thus realizing a liquid crystal device with high contrast and high visibility.

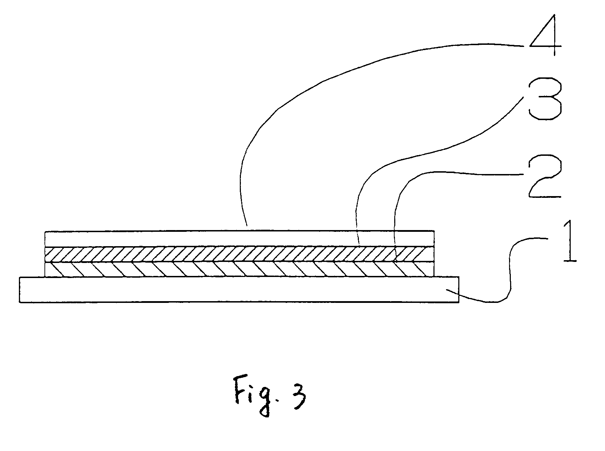

Third embodiment: A schematic representation of a cross section of an example of the optical anisotropic element of the invention is shown in FIG. 3. A polyimide thin film 2 (SP740, Tore Co., Ltd.) is formed on a transparent substrate 1, and the polyimide thin film 2 on this substrate 1 is treated by rubbing in a uniaxial direction. A liquid crystal macromolecular film 3 approximately 6 µm thick and produced by adding CB-15 (37), an optically active compound produced by Merck Corporation and having an asymmetrical center, to a concentration of 5% to a 95%:5% mixture of the side-chain liquid crystal macromolecules (3) and (2) shown above, which have a siloxane chain as a skeleton and demonstrate a nematic phase, is formed on this polyimide thin film 2. A protective film 4 with no optical anisotropy is formed on this liquid crystal macromolecular film 3. The optical anisotropic element of the invention has an effect that compensates coloration caused by rotatory polarization and birefringence due to the twist of the liquid crystal in the STN liquid crystal cell, thus realizing a liquid crystal device with high contrast and high visibility.

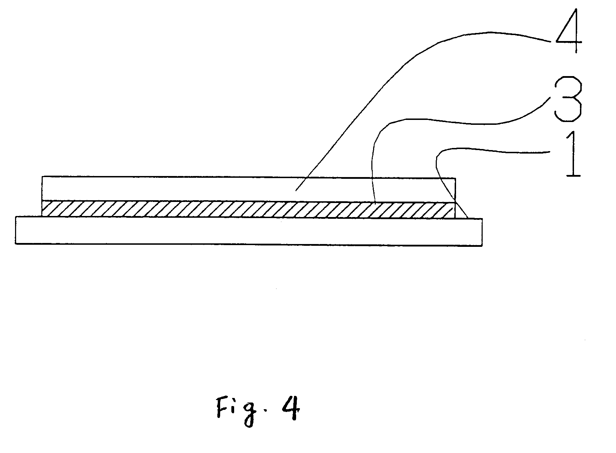

Fourth embodiment: A schematic representation of a cross section of an example of the optical anisotropic element of the invention is shown in FIG. 4. The top of the transparent substrate 1 is treated by rubbing in a uniaxial direction. A liquid crystal macromolecular film 3 approximately 6 µm thick and produced by adding CB-15 (37), an optically active compound produced by Merck Corporation and having an asymmetrical center, to a concentration of 5% to a 95%:5% mixture of the side-chain liquid crystal macromolecules (3) and (2) shown above, which have a siloxane chain as a skeleton and demonstrate a nematic phase, is formed on this transparent substrate 1. A transparent protective film 4 with no optical anisotropy is formed on this liquid crystal macromolecular film 3. This liquid crystal macromolecular film 3 has a twist orientation that is twisted 230 degrees to the right. The optical anisotropic element of the invention has an effect that compensates coloration caused by rotatory polarization and birefringence due to the twist of the liquid crystal in the STN liquid crystal cell, thus realizing a liquid crystal device with high contrast and high visibility.

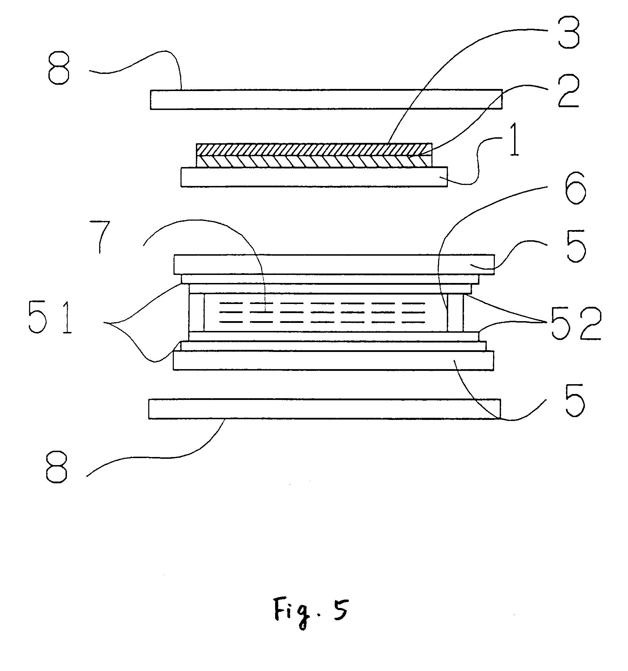

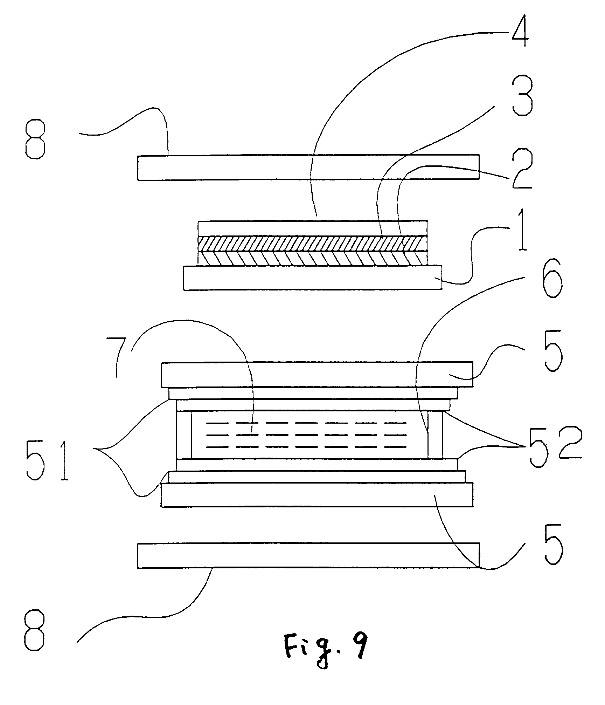

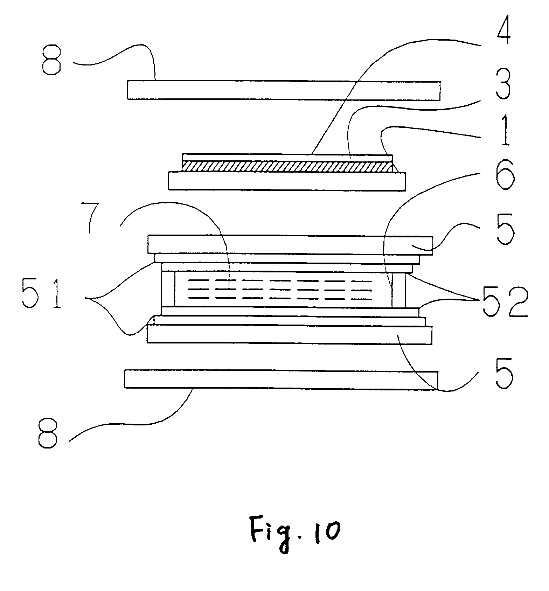

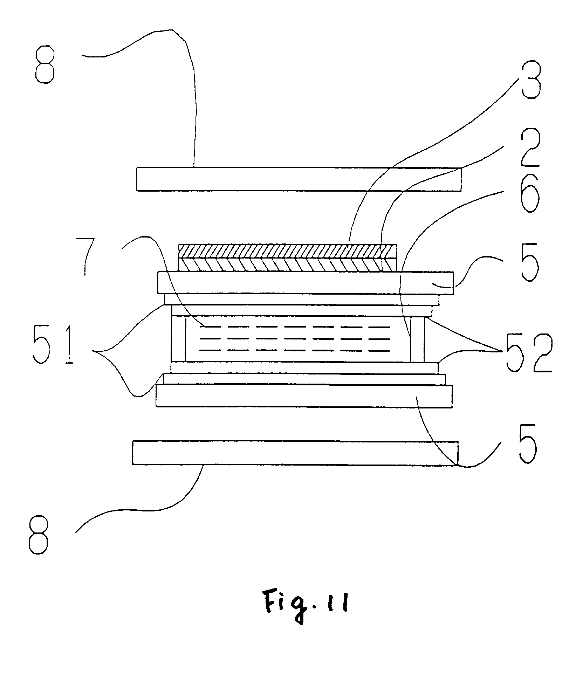

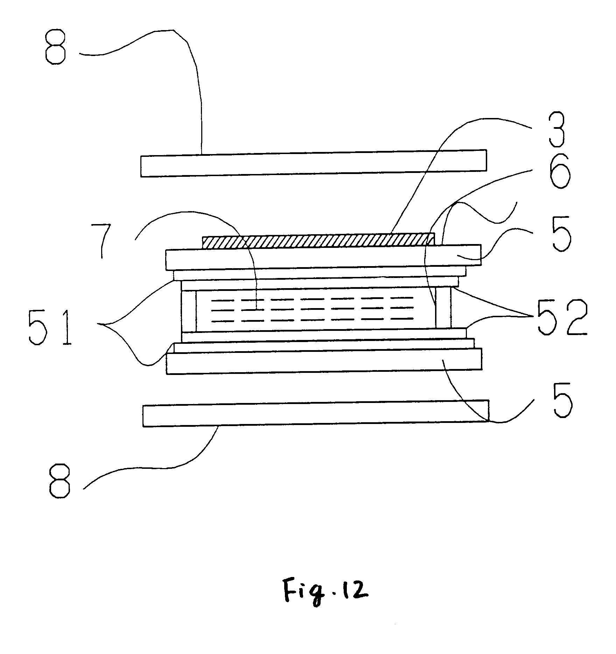

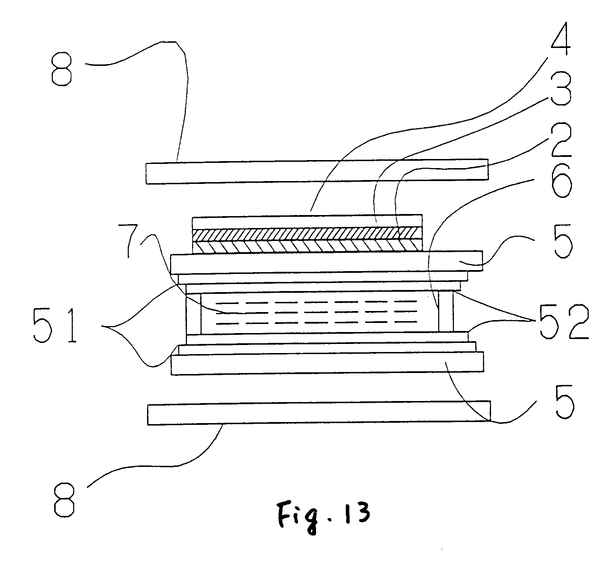

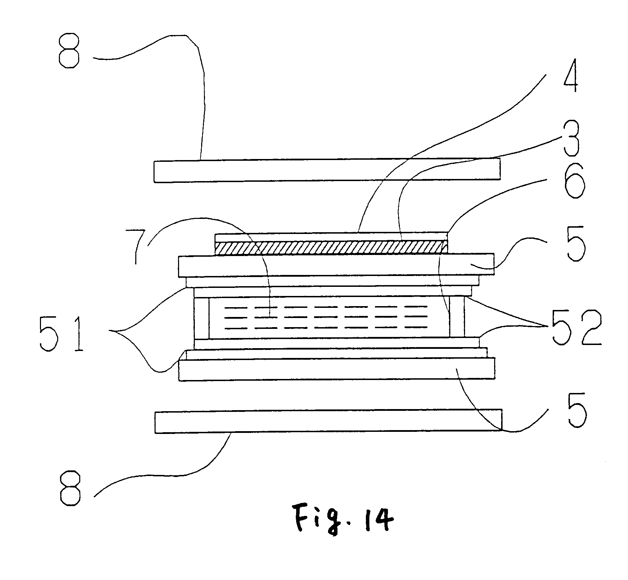

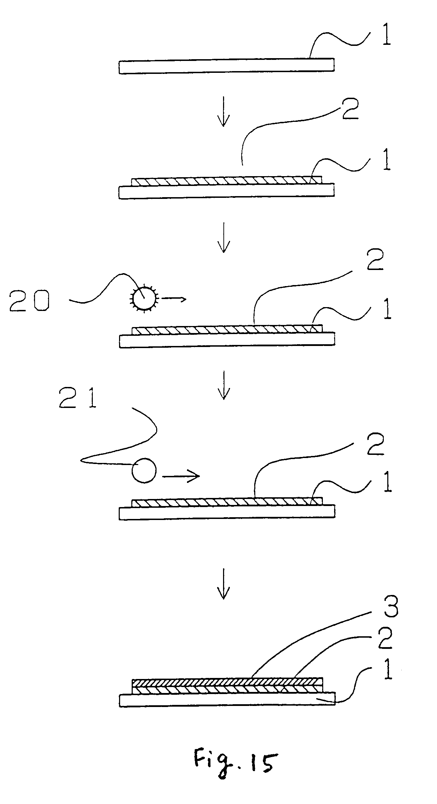

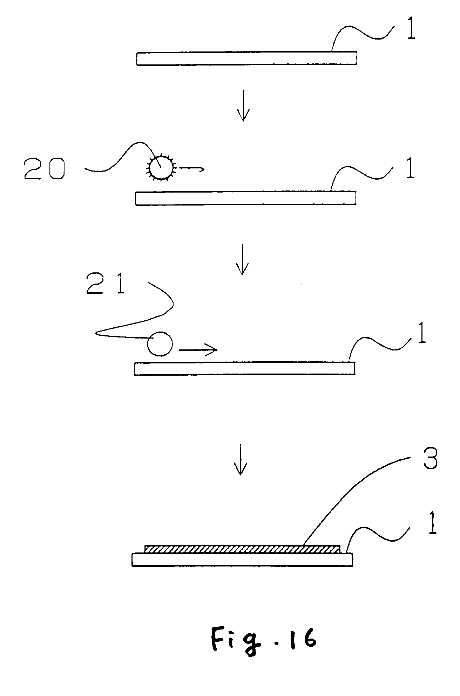

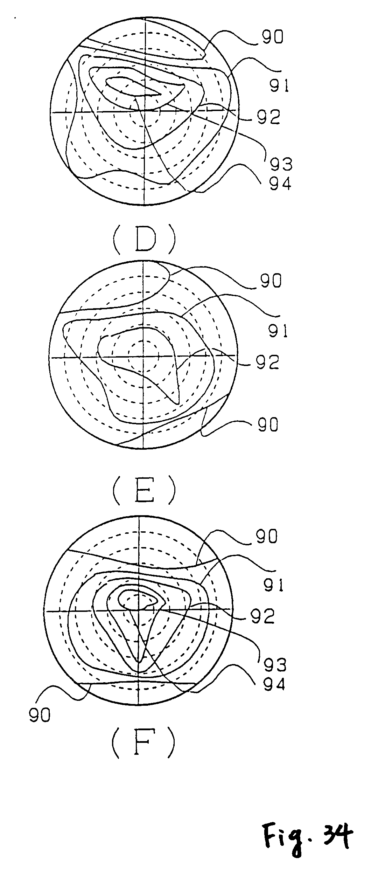

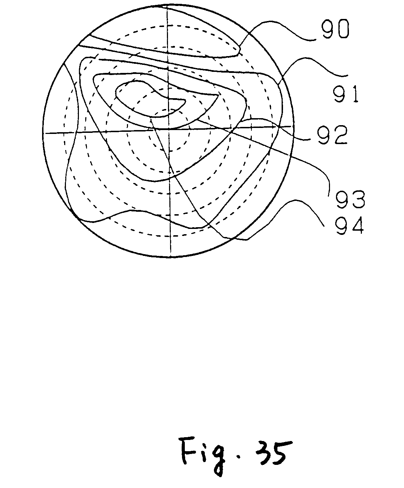

Fifth Embodiment: A schematic representation of a cross section of an example of the liquid crystal device of the invention equipped with the optical anisotropic element obtained in the first embodiment is shown in FIG. 5. In FIG. 5, the transparent substrates 5 of the liquid crystal cell having the transparent electrodes 51 and the liquid crystal orientation films 52 are mated together with the spacers 6 between them, and liquid crystal (ZLI4506, Merck Corporation) 7 is vacuum injected between them. This optical anisotropic element and liquid crystal cell are disposed between the two polarizing plates 8. The direction of orientation of the liquid crystal at this time, the direction of the absorption axes of the polarizing plates and the direction of the major axis of the liquid crystal macromolecules are shown in FIG. 6. In FIG. 6, 9 is the direction of rubbing on the lower electrode substrate of the liquid crystal display cell in FIG. 5, 10 is the direction of rubbing on the upper electrode substrate of the liquid crystal display cell in FIG. 5, 11 is the direction of the major axis of those liquid crystal molecules in the liquid crystal macromolecular film 3 adjacent to the liquid crystal display cell in FIG. 5, 12 is direction of the major axis of those liquid crystal molecules of the liquid crystal macromolecular film 3 adjacent to the upper polarizing plate 8 in FIG. 5, 13 is the direction of the polarizing axis (absorption axis) of the lower polarizing plate 8 in FIG. 5, 14 is the direction of the polarizing axis (absorption axis) of the upper polarizing plate 8 in FIG. 5, 15 is the size of the twist angle of the liquid crystal display cell in FIG. 5, 16 is the angle formed by direction 11 and direction 10, 17 is the angle formed by 14 and direction 12, 18 is the angle formed by direction 9 and direction 13, and 19 is the angle formed by direction 12 and direction 11. In this embodiment, the above conditions are set as described below. Angle 16 is 90 degrees and angle 17 is 45 degrees. Further, the twist angle 15 of the liquid crystal display cell in FIG. 5 is approximately 200 degrees to the left, and Δn x d of the liquid crystal in the liquid crystal display cell in FIG. 5 is 0.85 µm. Following this, assembly of the liquid crystal device is completed by connecting the driver for liquid crystal drive and the circuit for liquid crystal drive to the above liquid crystal cell and positioning a light source for illumination behind the liquid crystal cell. Black-and-white display in this liquid crystal device was confirmed by applying voltages equivalent to ON and OFF voltages. The contrast curve at that time is shown in FIG. 7. The relationship between contrast and angle of visibility is shown in FIG. 34. In the figure, (D), (E) and (F) show the relationship between contrast and angle of visibility in a prior art two-layer supertwist nematic liquid crystal device, a liquid crystal device that uses one uniaxial oriented film, and a liquid crystal device that uses two uniaxial oriented films. The relationship between contrast and angle of visibility in a liquid crystal device equipped with an optical anisotropic element produced in this embodiment is shown in FIG. 35. As can be seen, a liquid crystal device is obtained in which the angle of visibility characteristic of the liquid crystal device is improved.

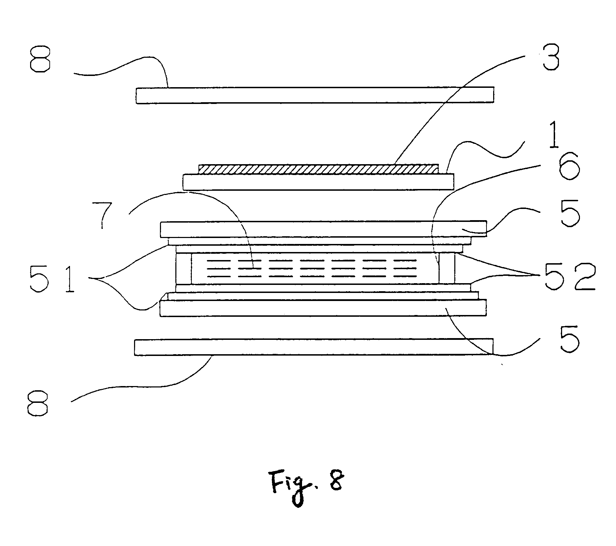

Sixth embodiment: A schematic representation of a cross section of an example of a liquid crystal device that uses the optical anisotropic element of the second embodiment is shown in FIG. 8. In the figure, the transparent substrates 5 of the liquid crystal cell having the transparent electrodes 51 and the liquid crystal orientation films 52 are mated together with the spacers 6 between them, and liquid crystal (ZLI4506, Merck Corporation) 7 is vacuum injected between them. This optical anisotropic element and liquid crystal display cell are disposed between the two polarizing plates 8. The configuration other than that described below is the same as the fifth embodiment, and therefore the above conditions are set as described below in this embodiment. Angle 16 is 85 degrees and angle 17 is 45 degrees. Further, the twist angle 15 of the liquid crystal display cell is approximately 200 degrees to the left, and Δn x d of the liquid crystal 7 in the liquid crystal display cell is 0.85 µm. Following this, assembly of the liquid crystal device is completed by connecting the driver for liquid crystal drive and the circuit for liquid crystal drive to the above liquid crystal cell and positioning a light source for illumination behind the liquid crystal cell. Black-and-white display in this liquid crystal device was confirmed by applying voltages equivalent to ON and OFF voltages, and display characteristics similar to those of the fifth embodiment were obtained.

Seventh embodiment: A schematic representation of a cross section of an example of a liquid crystal device that uses the optical anisotropic element of the third embodiment is shown in FIG. 9. In the figure, the transparent substrates 5 of the liquid crystal cell having the transparent electrodes 51 and the liquid crystal orientation films 52 are mated together with the spacers 6 between them, and liquid crystal (ZLI4506, Merck Corporation) 7 is vacuum injected between them. This optical anisotropic element and liquid crystal display cell are disposed between the two polarizing plates 8. The direction of orientation of the liquid crystal, the direction of the absorption axis of the polarizing plates and the direction of the major axis of the liquid crystal macromolecules are the same as in the fifth embodiment. Angle 16 is 80 degrees and angle 17 is 50 degrees. Further, the twist angle 15 of the liquid crystal display cell is approximately 230 degrees to the left, and Δn x d of the liquid crystal 7 in the liquid crystal display cell is 0.85 µm. Following this, assembly of the liquid crystal device is completed by connecting the driver for liquid crystal drive and the circuit for liquid crystal drive to the above liquid crystal cell and positioning a light source for illumination behind the liquid crystal cell. Black-and-white display in this liquid crystal device was confirmed by applying voltages equivalent to ON and OFF voltages, and display characteristics similar to those of the fifth embodiment were obtained.

Eighth embodiment: A schematic representation of a cross section of an example of a liquid crystal device that uses the optical anisotropic element of the fourth embodiment is shown in FIG. 10. In FIG. 10, the transparent substrates 5 of the liquid crystal cell having the transparent electrodes 51 and the liquid crystal orientation films 52 are mated together with the spacers 6 between them, and liquid crystal (ZLI4506, Merck Corporation) 7 is vacuum injected between them. This optical anisotropic element and liquid crystal display cell are disposed between the two polarizing plates 8. The direction of orientation of the liquid crystal, the direction of the absorption axis of the polarizing plates and the direction of the major axis of the liquid crystal molecules are the same as in the fifth embodiment. The above conditions were set as described below in this embodiment. Angle 16 is 90 degrees and angle 17 is 45 degrees. Further, the twist angle 15 of the liquid crystal display cell is approximately 240 degrees to the left, and Δn x d of the liquid crystal 7 in the liquid crystal display cell is 0.85 µm. Following this, assembly of the liquid crystal device is completed by connecting the driver for liquid crystal drive and the circuit for liquid crystal drive to the above liquid crystal cell and positioning a light source for illumination behind the liquid crystal cell. Black-and-white display in this liquid crystal device was confirmed by applying voltages equivalent to ON and OFF voltages, and display characteristics similar to those of the fifth embodiment were obtained.

Ninth embodiment: A schematic representation of a cross section of an example of the liquid crystal device of the invention is shown in FIG. 11. In the figure, the transparent substrates 5 of the liquid crystal cell having the transparent electrodes 51 and the liquid crystal orientation films 52 are mated together with the spacers 6 between them, and liquid crystal (ZLI4506, Merck Corporation) 7 is vacuum injected between them. A polyimide thin film 2 (SP740, Tore Co., Ltd.) is formed on the transparent substrate 5 of the liquid crystal cell, which does not come in contact with the liquid crystal of the liquid crystal display cell, and the polyimide thin film 2 on this transparent substrate 5 is treated by rubbing in a uniaxial direction. A liquid crystal macromolecular film 3 approximately 6 µm thick and produced by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, is formed on this polyimide thin film 2. This liquid crystal macromolecular film 3 has a twist orientation that is twisted 230 degrees to the right. This liquid crystal display cell equipped with an optical anisotropic element is disposed between the two polarizing plates 8. The direction of orientation of the liquid crystal, the direction of the absorption axis of the polarizing plates and the direction of the major axis of the liquid crystal molecules are the same as in the fifth embodiment. Angle 16 is 89 degrees and angle 17 is 45 degrees. Further, the twist angle 15 of the liquid crystal display cell is approximately 200 degrees to the left, and Δn x d of the liquid crystal 7 in the liquid crystal display cell is 0.85 µm. Following this, assembly of the liquid crystal device is completed by connecting the driver for liquid crystal drive and the circuit for liquid crystal drive to the above liquid crystal cell and positioning a light source for illumination behind the liquid crystal cell. Black-and-white display in this liquid crystal device was confirmed by applying voltages equivalent to ON and OFF voltages, and display characteristics similar to those of the fifth embodiment were obtained.

Tenth embodiment: A schematic representation of a cross section of an example of the liquid crystal device of the invention is shown in FIG. 12. In the figure, the transparent substrates 5 of the liquid crystal cell having the transparent electrodes 51 and the liquid crystal orientation films 52 are mated together with the spacers 6 between them, and liquid crystal (ZLI4506, Merck Corporation) 7 is vacuum injected between them. The transparent substrate 5, which does not come in contact with the liquid crystal of the liquid crystal display cell, is treated by rubbing in a uniaxial direction. A liquid crystal macromolecular film 3 approximately 6 µm thick and produced by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, is formed on this transparent substrate 5. This liquid crystal macromolecular film 3 has a twist orientation that is twisted 230 degrees to the right. The liquid crystal display cell equipped with this optical anisotropic element is disposed between the two polarizing plates 8. The direction of orientation of the liquid crystal, the direction of the absorption axis of the polarizing plates and the direction of the major axis of the liquid crystal molecules are the same as in the fifth embodiment. Angle 16 is 85 degrees and angle 17 is 45 degrees. Further, the twist angle 15 of the liquid crystal display cell is approximately 230 degrees to the left, and Δn x d of the liquid crystal 7 in the liquid crystal display cell is 0.85 µm. Following this, assembly of the liquid crystal device is completed by connecting the driver for liquid crystal drive and the circuit for liquid crystal drive to the above liquid crystal cell and positioning a light source for illumination behind the liquid crystal cell. Black-and-white display in this liquid crystal device was confirmed by applying voltages equivalent to ON and OFF voltages, and display characteristics similar to those of the fifth embodiment were obtained.

Eleventh embodiment: A schematic representation of a cross section of an example of the liquid crystal device of the invention is shown in FIG. 13. In the figure, the transparent substrates 5 of the liquid crystal cell having the transparent electrodes 51 and the liquid crystal orientation films 52 are mated together with the spacers 6 between them, and liquid crystal (ZLI4506, Merck Corporation) 7 is vacuum injected between them. A polyimide thin film 2 (SP740, Tore Co., Ltd.) is formed on the transparent substrate 5 of the liquid crystal display cell, which does not come in contact with the liquid crystal of the liquid crystal display cell, and the polyimide thin film 2 on this transparent substrate 5 is treated by rubbing in a uniaxial direction. A liquid crystal macromolecular film 3 approximately 6 µm thick and produced by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, is formed on this polyimide thin film 2. A protective film 4 with no optical anisotropy is formed on this liquid crystal macromolecular film 3. This liquid crystal macromolecular film 3 has a twist orientation that is twisted 230 degrees to the right. The liquid crystal display cell equipped with this optical anisotropic element is disposed between the two polarizing plates 8. The direction of orientation of the liquid crystal, the direction of the absorption axis of the polarizing plates and the direction of the major axis of the liquid crystal molecules are the same as in the fifth embodiment. Angle 16 is 100 degrees and angle 17 is 45 degrees. Further, the twist angle 15 of the liquid crystal display cell is approximately 200 degrees to the left, and Δn x d of the liquid crystal 7 in the liquid crystal display cell is 0.85 µm. Following this, assembly of the liquid crystal device is completed by connecting the driver for liquid crystal drive and the circuit for liquid crystal drive to the above liquid crystal cell and positioning a light source for illumination behind the liquid crystal cell. Black-and-white display in this liquid crystal device was confirmed by applying voltages equivalent to ON and OFF voltages, and display characteristics similar to those of the fifth embodiment were obtained.

Embodiment 12: A schematic representation of a cross section of an example of the liquid crystal device of the invention is shown in FIG. 14. In the figure, the transparent substrates 5 of the liquid crystal cell having the transparent electrodes 51 and the liquid crystal orientation films 52 are mated together with the spacers 6 between them, and liquid crystal (ZLI4506, Merck Corporation) 7 is vacuum injected between them. The top of the transparent substrate 5 of the liquid crystal display cell, which does not come in contact with the liquid crystal 7 of the liquid crystal display cell, is treated by rubbing in a uniaxial direction. Further, a liquid crystal macromolecular film 3 approximately 6 µm thick and produced by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, is formed on the transparent substrate 5 of the liquid crystal display cell. A protective film 4 with no optical anisotropy is formed on this liquid crystal macromolecular film 3. This liquid crystal macromolecular film 3 has a twist orientation that is twisted 230 degrees to the right. The liquid crystal display cell equipped with this optical anisotropic element is disposed between the two polarizing plates 8. The direction of orientation of the liquid crystal, the direction of the absorption axis of the polarizing plates and the direction of the major axis of the liquid crystal molecules are the same as in the fifth embodiment. The above conditions were set as described below in this embodiment. Angle 16 is 90 degrees and angle 17 is 45 degrees. Further, the twist angle 15 of the liquid crystal display cell is approximately 200 degrees to the left, and Δn x d of the liquid crystal 7 in the liquid crystal display cell is 0.85 µm. Following this, assembly of the liquid crystal device is completed by connecting the driver for liquid crystal drive and the circuit for liquid crystal drive to the above liquid crystal cell and positioning a light source for illumination behind the liquid crystal cell. Black-and-white display in this liquid crystal device was confirmed by applying voltages equivalent to ON and OFF voltages, and display characteristics similar to those of the fifth embodiment were obtained.

Thirteenth embodiment: The same optical characteristics are obtained in the liquid crystal devices of the fifth to the twelfth embodiments whether the polarizing plate 8 is optically adhered to the surface of the liquid crystal macromolecular film 3 or to the protective film 4 on the liquid crystal macromolecular film 3 with an adhesive made from an organic material between them.

Embodiment 14: An example of the production method of the optical anisotropic element of the first embodiment of the invention is shown in FIG. 15. A polyimide thin film 2 is formed by applying polyimide (SP740, Tore Co., Ltd.) on the transparent substrate 1 and heating the substrate to harden the film. The polyimide thin film 2 on this substrate is treated by rotational rubbing in one direction using a nylon brush 20, after which a liquid crystal macromolecular film 3 approximately 6 µm thick is formed by applying a liquid crystal macromolecular solution (18% solids concentration) prepared by adding CB-15 (37), an optically active compound produced by Merck Corporation and having an asymmetrical center, to a concentration of 5% to a 90%:10% mixture of the sidechain liquid crystal macromolecules (3) and (2) shown above, which have a siloxane chain as a skeleton and demonstrate a nematic phase, with a bar coater 21 and heating it to evaporate the solvent. Following this, an optical anisotropic element with a twist orientation 230 degrees to the right is obtained by heating it for three hours at 80° C to perform orientation and then quickly cooling it. The liquid crystal macromolecules are uniformly oriented over a wide range. When this optical anisotropic element was superposed on a liquid crystal cell with a 240-degree twist to the left so that the directions of all the axes were the same as in the fifth embodiment and a voltage was impressed on the liquid crystal cell, nearly black-and-white display was obtained, thus confirming that black-and-white display with an STN liquid crystal display element is possible.

Fifteenth embodiment: An example of the production method of the optical anisotropic element of the second embodiment of the invention is shown in FIG. 16. The top of this substrate 1 is treated by rotational rubbing in one direction using a nylon brush 20, after which a liquid crystal macromolecular film 3 approximately 6 µm thick is formed by applying a liquid crystal macromolecular solution (18% solids concentration) prepared by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, with a bar coater 21 and heating it to evaporate the solvent. Following this, an optical anisotropic element with a twist orientation 230 degrees to the right is obtained by heating it for three hours at 80° C to perform orientation and then quickly cooling it. The liquid crystal macromolecules are uniformly oriented over a wide range. When this optical anisotropic element was superposed on a liquid crystal cell with a 240-degree twist to the left so that the directions of all the axes were the same as in the fifth embodiment and a voltage was impressed on the liquid crystal cell, nearly black-and-white display was obtained, thus confirming that black-and-white display with an STN liquid crystal display element is possible.

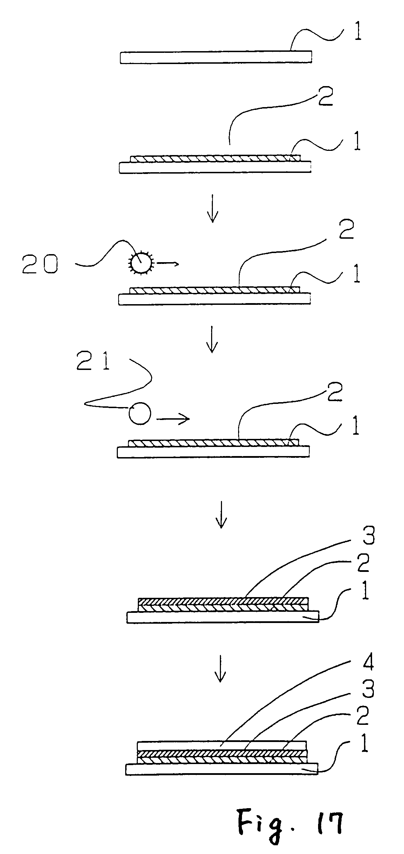

Sixteenth embodiment: An example of the production method of the optical anisotropic element of the third embodiment of the invention is shown in FIG. 17. A polyimide thin film 2 is formed by applying polyimide (SP740, Tore Co., Ltd.) on the transparent substrate 1 and heating the substrate to harden the film. The polyimide thin film 2 on this substrate is treated by rotational rubbing in one direction using a nylon brush 20, after which a liquid crystal macromolecular film 3 approximately 6 µm thick is formed by applying a liquid crystal macromolecular solution (18% solids concentration) prepared by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, with a bar coater 21 and heating it to evaporate the solvent. Following this, an optical anisotropic element with a twist orientation 230 degrees to the right is obtained by heating it for three hours at 80° C to perform orientation and then quickly cooling it. A water-based acrylic resin is then applied to form a protective film 4. The liquid crystal macromolecules are uniformly oriented over a wide range. When this optical anisotropic element was superposed on a liquid crystal cell with a 240-degree twist to the left so that the directions of all the axes were the same as in the fifth embodiment and a voltage was impressed on the liquid crystal cell, nearly black-and-white display was obtained, thus confirming that black-and-white display with an STN liquid crystal display element is possible.

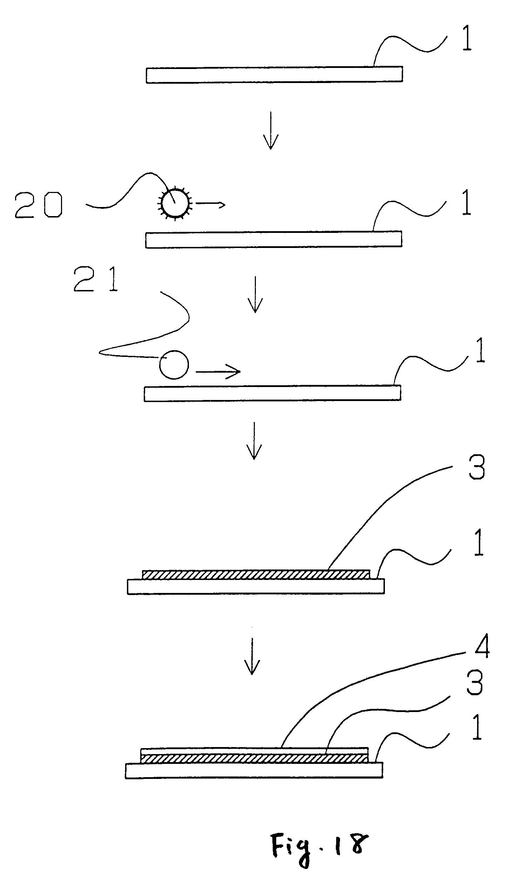

Seventeenth embodiment: An example of the production method of the optical anisotropic element of the fourth embodiment of the invention is shown in FIG. 18. The top of this transparent substrate 1 is treated by rotational rubbing in one direction using a nylon brush 20, after which a liquid crystal macromolecular film 3 approximately 6 µm thick is formed by applying a liquid crystal macromolecular solution (18% solids concentration) prepared by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, with a bar coater 21 and heating it to evaporate the solvent. Following this, an optical anisotropic element with a twist orientation 230 degrees to the right is obtained by heating it for three hours at 80° C to perform orientation and then quickly cooling it. A water-based acrylic resin is then applied to form a protective film 4. The liquid crystal macromolecules are uniformly oriented over a wide range. When this optical anisotropic element was superposed on a liquid crystal cell with a 240-degree twist to the left so that the directions of all the axes were the same as in the fifth embodiment and a voltage was impressed on the liquid crystal cell, nearly black-and-white display was obtained, thus confirming that black-and-white display with an STN liquid crystal display element is possible.

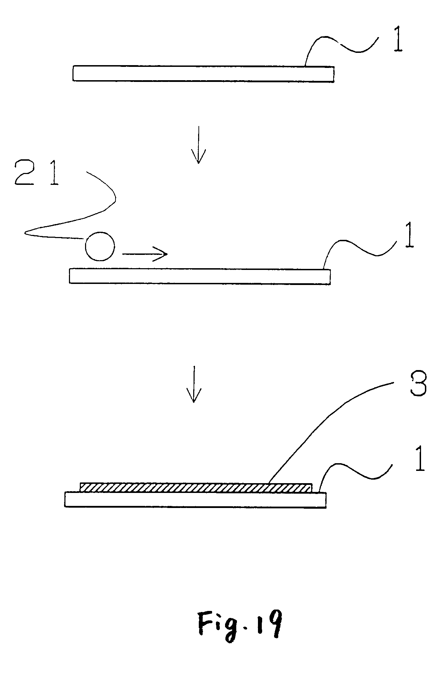

Eighteenth embodiment: An example of the production method of the optical anisotropic element of the invention is shown in FIG. 19. A plastic substrate produced by drawing was used as the transparent substrate in this embodiment. A liquid crystal macromolecular film 3 approximately 6 µm thick is formed on the top of the transparent substrate 1 by applying a liquid crystal macromolecular solution (18% solids concentration) prepared by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, with a bar coater 21 and heating it to evaporate the solvent. Following this, an optical anisotropic element with a twist orientation 230 degrees to the right is obtained by heating it for three hours at 80° C to perform orientation and then quickly cooling it. The liquid crystal macromolecules are uniformly oriented over a wide range. When this optical anisotropic element was superposed on a liquid crystal cell with a 240-degree twist to the left so that the directions of all the axes were the same as in the fifth embodiment and a voltage was impressed on the liquid crystal cell, nearly black-and-white display was obtained, thus confirming that black-and-white display with an STN liquid crystal display element is possible.

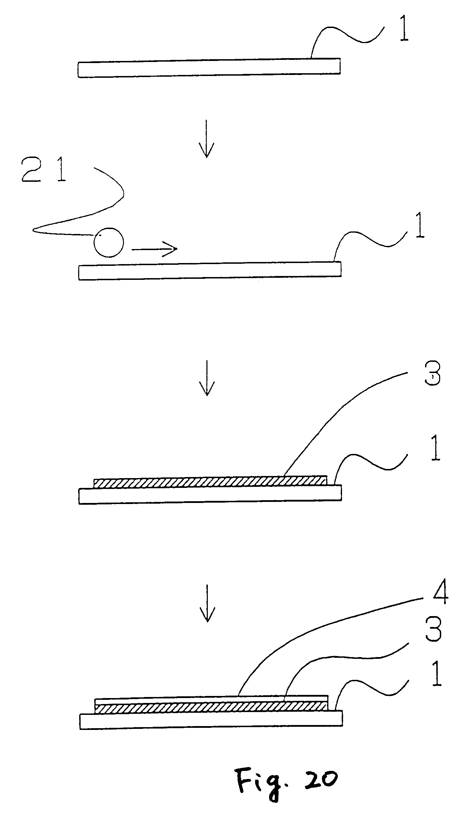

Nineteenth embodiment: An example of the production method of the optical anisotropic element of the invention is shown in FIG. 20. A plastic substrate produced by drawing was used as the transparent substrate in this embodiment. A liquid crystal macromolecular film 3 approximately 6 µm thick is formed on the top of this transparent substrate 1 by applying a liquid crystal macromolecular solution (18% solids concentration) prepared by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, with a bar coater 21 and heating it to evaporate the solvent. Following this, an optical anisotropic element with a twist orientation 230 degrees to the right is obtained by heating it for three hours at 80° C to perform orientation and then quickly cooling it. The liquid crystal macromolecules are uniformly oriented over a wide range. When this optical anisotropic element was superposed on a liquid crystal cell with a 240-degree twist to the left so that the directions of all the axes were the same as in the fifth embodiment and a voltage was impressed on the liquid crystal cell, nearly black-and-white display was obtained, thus confirming that black-and-white display with an STN liquid crystal display element is possible.

Twentieth embodiment: The same effect is obtained in the liquid crystal devices of the eighteenth and nineteenth embodiments when a drawn mixture of a material with a negative optical anisotropy and a material with a positive optical anisotropy is used for the drawn plastic substrate.

Twenty-first embodiment: The same effect is obtained in the liquid crystal devices of the eighteenth and nineteenth embodiments when a film that is a lamination of a material with a negative optical anisotropy and a material with a positive optical anisotropy is used for the drawn plastic substrate.

Twenty-second embodiment: The same effect is obtained in the liquid crystal devices of the eighteenth and nineteenth embodiments when a film on which a drawn film with optical anisotropy is superposed such that the axes of drawing intersect each other at right angles.

Twenty-third embodiment: The same effect is obtained in the liquid crystal devices of the fourteenth, fifteenth, sixteenth and seventeenth embodiments when inorganic glass is used for the transparent substrate.

Twenty-fourth embodiment: The same effect is obtained in the liquid crystal devices of the fourteenth, fifteenth, sixteenth and seventeenth embodiments when a plastic substrate obtained by casting is used for the transparent substrate.

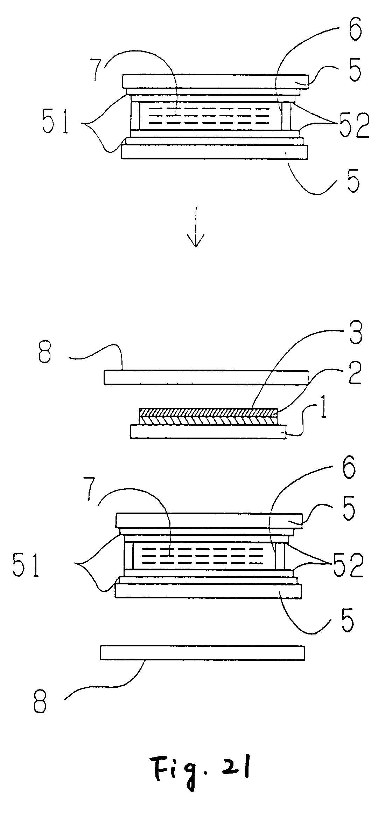

Twenty-fifth embodiment: A schematic representation of an example of the production method for a liquid crystal device equipped with the optical anisotropic element of the invention is shown in FIG. 21. A transparent electrode 51 1000 Å thick and made from ITO is formed on the transparent substrate 5 of the liquid crystal display cell, and after it has been patterned as prescribed by a photo process, the liquid crystal orientation film 52 is formed to prepare the transparent substrate 5 of the liquid crystal display cell with a transparent electrode 51 and liquid crystal orientation film 52. After forming a transparent electrode 51 in a similar manner on the opposing transparent substrate 5 of the liquid crystal display cell, which is separated by spacers 6 and liquid crystal (ZLI4506), and patterning it, the liquid crystal orientation film 52 is formed, and the cell is assembled so that the electrodes are at nearly right angles to each other. The liquid crystal device is prepared by positioning the optical anisotropic element produced in the fourteenth embodiment on the liquid crystal display cell and sandwiching everything between two polarizing plates 8. The direction of orientation of the liquid crystal, the direction of the absorption axis of the polarizing plates and the direction of the major axis of the liquid crystal macromolecules are the same as in the fifth embodiment. When a voltage was impressed on the liquid crystal cell, nearly black-and-white display was obtained, thus confirming that black-and-white display with an STN liquid crystal display element is possible.

Twenty-sixth embodiment: The same display characteristics as in the twenty-fifth embodiment can be obtained when the optical anisotropic element produced in the fifteenth embodiment is combined with the liquid crystal display cell in the same way as in the twenty-fifth embodiment.

Twenty-seventh embodiment: The same display characteristics as in the twenty-fifth embodiment can be obtained when the optical anisotropic element produced in the sixteenth embodiment is combined with the liquid crystal display cell in the same way as in the twenty-fifth embodiment.

Twenty-eighth embodiment: The same display characteristics as in the twenty-fifth embodiment can be obtained when the optical anisotropic element produced in the seventeenth embodiment is combined with the liquid crystal display cell in the same way as in the twenty-fifth embodiment.

Twenty-ninth embodiment: The same display characteristics as in the twenty-fifth embodiment can be obtained when the optical anisotropic element produced in the eighteenth embodiment is combined with the liquid crystal display cell in the same way as in the twenty-fifth embodiment.

Thirtieth embodiment: The same display characteristics as in the twenty-fifth embodiment can be obtained when the optical anisotropic element produced in the nineteenth embodiment is combined with the liquid crystal display cell in the same way as in the twenty-fifth embodiment.

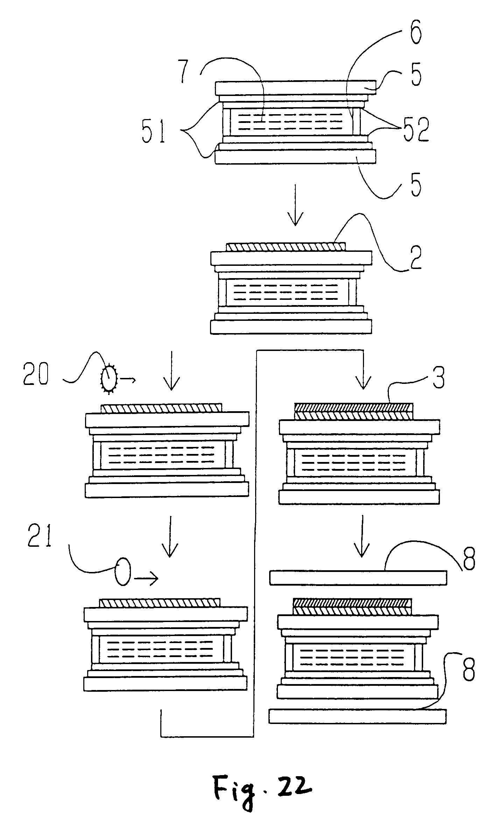

Thirty-first embodiment: A schematic representation of an example of the production method for a liquid crystal device equipped with the optical anisotropic element of the invention is shown in FIG. 22. A transparent electrode 51 1,000 Å thick and made from ITO is formed on the transparent substrate 5 of the liquid crystal display cell, and after it has been patterned as prescribed by a photo process, the liquid crystal orientation film 52 is formed to prepare the transparent substrate 5 of the liquid crystal display cell with a transparent electrode 51 and liquid crystal orientation film 52. After forming a transparent electrode 51 in a similar manner on the opposing transparent substrate 5 of the liquid crystal display cell, which is separated by spacers 6 and liquid crystal (ZLI4506), and patterning it, the liquid crystal orientation film 52 is formed, and the cell is assembled so that the electrodes are at nearly right angles to each other. A polyimide thin film 2 is formed by applying polyimide (SP740, Tore Co., Ltd.) on the transparent substrate 5 of the liquid crystal display cell, which does not come in contact with the liquid crystal 7 of the liquid crystal display cell, and heating the substrate to harden the film. The polyimide thin film 2 on this substrate is treated by rotational rubbing in one direction using a nylon brush 20, after which a liquid crystal macromolecular film 3 approximately 6 µm thick is formed by applying a liquid crystal macromolecular solution (18% solids concentration) prepared by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, with a bar coater 21 and heating it to evaporate the solvent. Following this, a liquid crystal device equipped with an optical anisotropic element with a twist orientation 230 degrees to the right is obtained by heating the element for three hours at 80° C to perform orientation and then quickly cooling it. Each of the axes is disposed in the same manner as in the ninth embodiment. Following this, assembly of the liquid crystal device is completed by connecting the driver for liquid crystal drive and the circuit for liquid crystal drive to the above liquid crystal device and positioning a light source for illumination behind the liquid crystal device. Black-and-white display in this liquid crystal device was confirmed by applying voltages equivalent to ON and OFF voltages, and the same display characteristics as in the fifth embodiment were obtained.

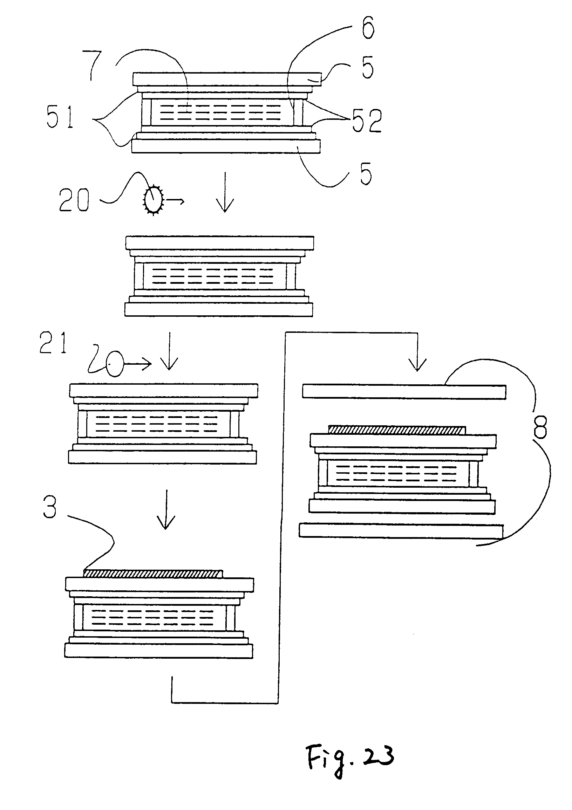

Thirty-second embodiment: A schematic representation of an example of the production method for a liquid crystal device equipped with the optical anisotropic element of the invention is shown in FIG. 23. A transparent electrode 51 1,000 Å thick and made from ITO is formed on the transparent substrate 5 of the liquid crystal display cell, and after it has been patterned as prescribed by a photo process, the liquid crystal orientation film 52 is formed to prepare the transparent substrate 5 of the liquid crystal display cell with a transparent electrode 51 and liquid crystal orientation film 52. After forming a transparent electrode 51 in a similar manner on the opposing transparent substrate 5 of the liquid crystal display cell, which is separated by spacers 6 and liquid crystal (ZLI4506), and patterning it, the liquid crystal orientation film 52 is formed, and the cell is assembled so that the electrodes are at nearly right angles to each other. The top of the transparent substrate 5 of the liquid crystal display cell, which does not come in contact with the liquid crystal 7 of the liquid crystal display cell, is treated by rotational rubbing in one direction using a nylon brush 20, after which a liquid crystal macromolecular film 3 approximately 6 µm thick is formed by applying a liquid crystal macromolecular solution (18% solids concentration) prepared by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, with a bar coater 21 and heating it to evaporate the solvent. Following this, a liquid crystal device equipped with an optical anisotropic element with a twist orientation 230 degrees to the right is obtained by heating the element for three hours at 80° C to perform orientation and then quickly cooling it. The liquid crystal macromolecules are uniformly oriented over a wide range. Each of the axes is disposed in the same manner as in the tenth embodiment. Following this, assembly of the liquid crystal device is completed by connecting the driver for liquid crystal drive and the circuit for liquid crystal drive to the above liquid crystal device and positioning a light source for illumination behind the liquid crystal device. Black-and-white display in this liquid crystal device was confirmed by applying voltages equivalent to ON and OFF voltages. Those contrast curves are shown in FIG. 7. This embodiment yielded a liquid crystal device with the same relationship between contrast and angle of visibility as that shown in FIG. 35.

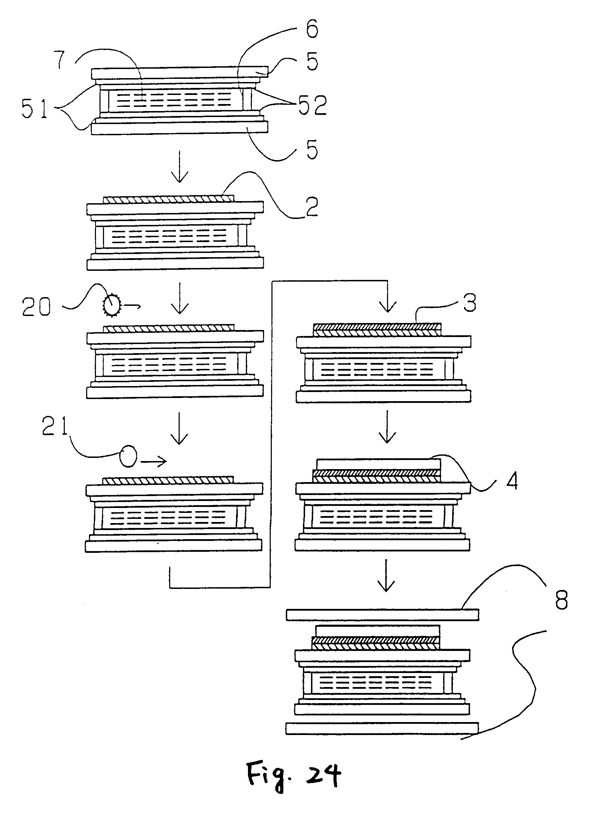

Thirty-third embodiment: A schematic representation of an example of the production method for a liquid crystal device equipped with the optical anisotropic element of the invention is shown in FIG. 24. A transparent electrode 51 1,000 Å thick and made from ITO is formed on the transparent substrate 5 of the liquid crystal display cell, and after it has been patterned as prescribed by a photo process, the liquid crystal orientation film 52 is formed to prepare the transparent substrate 5 of the liquid crystal display cell with a transparent electrode 51 and liquid crystal orientation film 52. After forming a transparent electrode 51 in a similar manner on the opposing transparent substrate 5 of the liquid crystal display cell, which is separated by spacers 6 and liquid crystal (ZLI4506), and patterning it, the liquid crystal orientation film 52 is formed, and the cell is assembled so that the electrodes are at nearly right angles to each other. A polyimide thin film 2 is formed by applying polyimide (SP740, Tore Co., Ltd.) on the transparent substrate 5 of the liquid crystal display cell, which does not come in contact with the liquid crystal 7 of the liquid crystal display cell, and heating the substrate to harden the film. The polyimide thin film 2 on this substrate is treated by rotational rubbing in one direction using a nylon brush 20, after which a liquid crystal macromolecular film 3 approximately 6 µm thick is formed by applying a liquid crystal macromolecular solution (18% solids concentration) prepared by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, with a bar coater 21 and heating it to evaporate the solvent. Following this, a liquid crystal device equipped with an optical anisotropic element with a twist orientation 230 degrees to the right is obtained by heating the element for three hours at 80° C to perform orientation and then quickly cooling it. Further, a protective film 4 is formed by applying a water-based acrylic resin. Each of the axes is disposed in the same manner as in the eleventh embodiment. Following this, assembly of the liquid crystal device is completed by connecting the driver for liquid crystal drive and the circuit for liquid crystal drive to the above liquid crystal device and positioning a light source for illumination behind the liquid crystal device. Black-and-white display in this liquid crystal device was confirmed by applying voltages equivalent to ON and OFF voltages. This embodiment yielded a liquid crystal device with the same relationship between contrast and angle of visibility as that shown in FIG. 35.

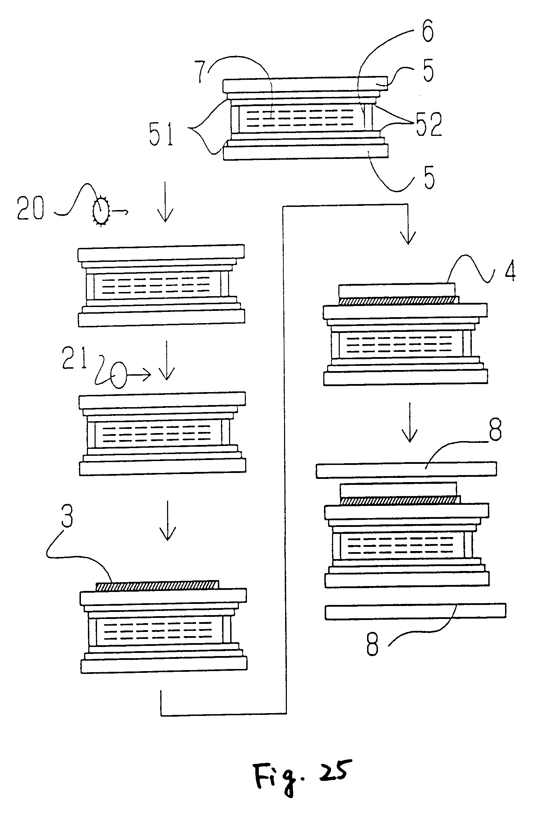

Thirty-fourth embodiment: A schematic representation of an example of the production method for a liquid crystal device equipped with the optical anisotropic element of the invention is shown in FIG. 25. A transparent electrode 51 1,000 Å thick and made from ITO is formed on the transparent substrate 5 of the liquid crystal display cell, and after it has been patterned as prescribed by a photo process, the liquid crystal orientation film 52 is formed to prepare the transparent substrate 5 of the liquid crystal display cell with a transparent electrode 51 and liquid crystal orientation film 52. After forming a transparent electrode 51 in a similar manner on the opposing transparent substrate 5 of the liquid crystal display cell, which is separated by spacers 6 and liquid crystal (ZLI4506), and patterning it, the liquid crystal orientation film 52 is formed, and the cell is assembled so that the electrodes are at nearly right angles to each other. The top of the transparent substrate 5 of the liquid crystal display cell, which does not come in contact with the liquid crystal 7 of the liquid crystal display cell, is treated by rotational rubbing in one direction using a nylon brush 20, after which a liquid crystal macromolecular film 3 approximately 6 µm thick is formed by applying a liquid crystal macromolecular solution (18% solids concentration) prepared by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, with a bar coater 21 and heating it to evaporate the solvent. Following this, a liquid crystal device equipped with an optical anisotropic element with a twist orientation 230 degrees to the right is obtained by heating the element for three hours at 80° C to perform orientation and then quickly cooling it. Further, a protective film 4 is formed by applying a water-based acrylic resin. The liquid crystal macromolecules are uniformly oriented over a wide range. Each of the axes is disposed in the same manner as in the twelfth embodiment. Following this, assembly of the liquid crystal device is completed by connecting the driver for liquid crystal drive and the circuit for liquid crystal drive to the above liquid crystal device and positioning a light source for illumination behind the liquid crystal device. Black-and-white display in this liquid crystal device was confirmed by applying voltages equivalent to ON and OFF voltages. This embodiment yielded a liquid crystal device with the same relationship between contrast and angle of visibility as that shown in FIG. 35.

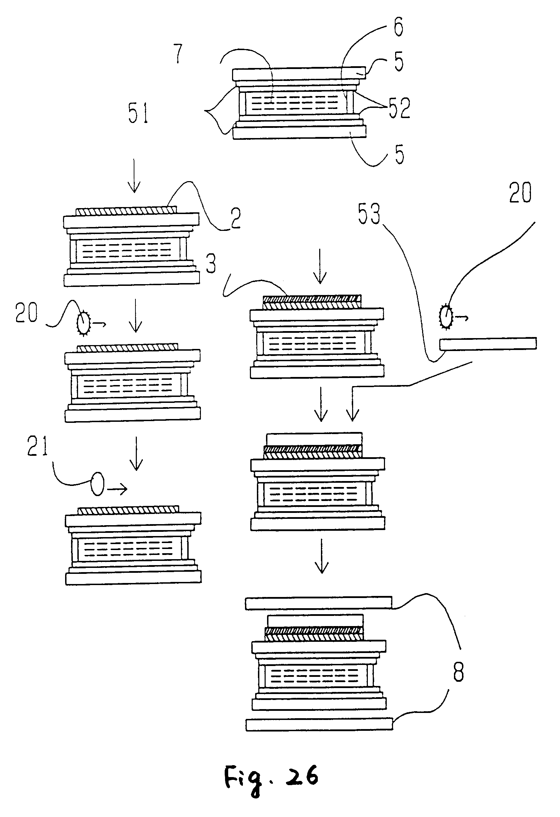

Thirty-fifth embodiment: A schematic representation of an example of the production method for a liquid crystal device equipped with the optical anisotropic element of the invention is shown in FIG. 26. A transparent electrode 51 1,000 Å thick and made from ITO is formed on the transparent substrate 5 of the liquid crystal display cell, and after it has been patterned as prescribed by a photo process, the liquid crystal orientation film 52 is formed to prepare the transparent substrate 5 of the liquid crystal display cell with a transparent electrode 51 and liquid crystal orientation film 52. After forming a transparent electrode 51 in a similar manner on the opposing transparent substrate 5 of the liquid crystal display cell, which is separated by spacers 6 and liquid crystal (ZLI4506), and patterning it, the liquid crystal orientation film 52 is formed, and the cell is assembled so that the electrodes are at nearly right angles to each other. A polyimide thin film 2 is formed by applying polyimide (SP740, Tore Co., Ltd.) on the transparent substrate 5 of the liquid crystal display cell, which does not come in contact with the liquid crystal 7 of the liquid crystal display cell, and heating the substrate to harden the film. The polyimide thin film 2 on this substrate is treated by rotational rubbing in one direction using a nylon brush 20, after which a liquid crystal macromolecular film 3 approximately 6 µm thick is formed by applying a liquid crystal macromolecular solution (18% solids concentration) prepared by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, with a bar coater 21 and heating it to evaporate the solvent. The surface of a transparent, 120-µm-thick plastic substrate is treated by rubbing with a nylon brush, and then the substrate is laid on top so that its rubbed surface is in contact with the liquid crystal macromolecular film 3. Following this, a liquid crystal device equipped with an optical anisotropic element with a twist orientation 230 degrees to the right is obtained by heating the element for three hours at 80° C to perform orientation and then quickly cooling it. Each of the axes is disposed in the same manner as in the ninth embodiment. Following this, assembly of the liquid crystal device is completed by connecting the driver for liquid crystal drive and the circuit for liquid crystal drive to the above liquid crystal device and positioning a light source for illumination behind the liquid crystal device. Black-and-white display in this liquid crystal device was confirmed by applying voltages equivalent to ON and OFF voltages. This embodiment yielded a liquid crystal device with the same relationship between contrast and angle of visibility as that shown in FIG. 35.

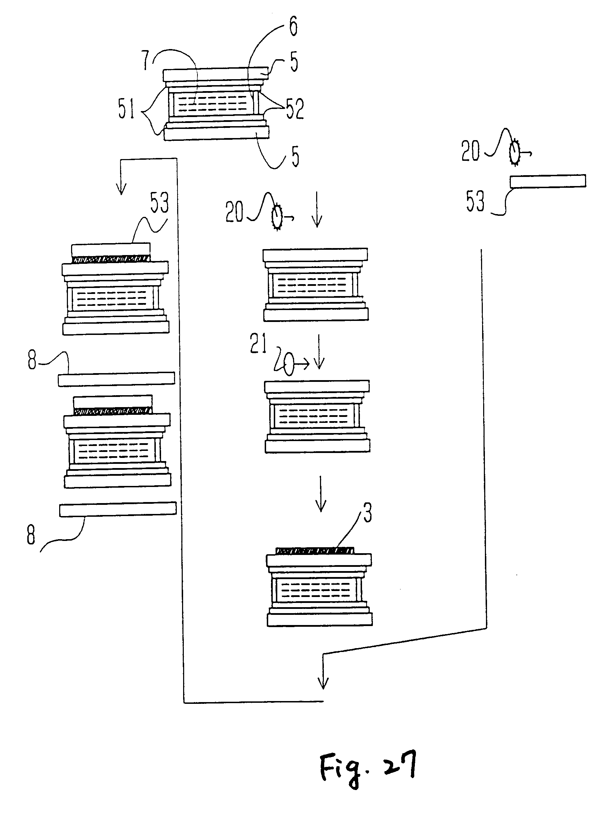

Thirty-sixth embodiment: A schematic representation of an example of the production method for a liquid crystal device equipped with the optical anisotropic element of the invention is shown in FIG. 27. A transparent electrode 51 1,000 Å thick and made from ITO is formed on the transparent substrate 5 of the liquid crystal display cell, and after it has been patterned as prescribed by a photo process, the liquid crystal orientation film 52 is formed to prepare the transparent substrate 5 of the liquid crystal display cell with a transparent electrode 51 and liquid crystal orientation film 52. After forming a transparent electrode 51 in a similar manner on the opposing transparent substrate 5 of the liquid crystal display cell, which is separated by spacers 6 and liquid crystal (ZLI4506), and patterning it, the liquid crystal orientation film 52 is formed, and the cell is assembled so that the electrodes are at nearly right angles to each other. The top of the transparent substrate 5 of the liquid crystal display cell, which does not come in contact with the liquid crystal 7 of the liquid crystal display cell, is treated by rotational rubbing in one direction using a nylon brush 20, after which a liquid crystal macromolecular film 3 approximately 6 µm thick is formed by applying a liquid crystal macromolecular solution (18% solids concentration) prepared by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, with a bar coater 21 and heating it to evaporate the solvent. The surface of a transparent, 120-µm-thick plastic substrate is treated by rubbing with a nylon brush, and then the substrate is laid on top so that its rubbed surface is in contact with the liquid crystal macromolecular film 3. Following this, a liquid crystal device equipped with an optical anisotropic element with a twist orientation 230 degrees to the right is obtained by heating the element for three hours at 80° C to perform orientation and then quickly cooling it. Each of the axes is disposed in the same manner as in the ninth embodiment. Following this, assembly of the liquid crystal device is completed by connecting the driver for liquid crystal drive and the circuit for liquid crystal drive to the above liquid crystal device and positioning a light source for illumination behind the liquid crystal device. Black-and-white display in this liquid crystal device was confirmed by applying voltages equivalent to ON and OFF voltages. This embodiment yielded a liquid crystal device with the same relationship between contrast and angle of visibility as that shown in FIG. 35.

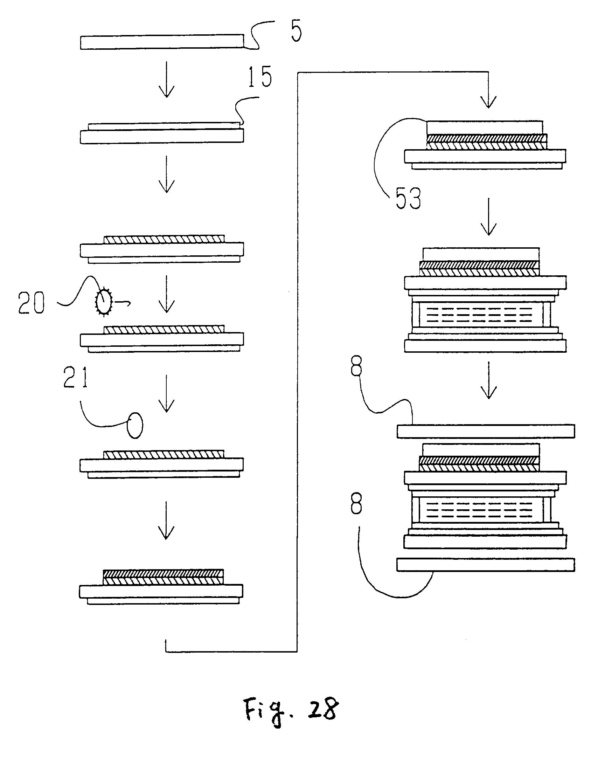

Thirty-seventh embodiment: A schematic representation of an example of the production method for a liquid crystal device equipped with the optical anisotropic element of the invention is shown in FIG. 28. A transparent electrode 51 1,000 Å thick and made from ITO is formed on the transparent substrate 5 of the liquid crystal display cell, and after it has been patterned as prescribed by a photo process, a polyimide thin film 2 is formed on the surface of the transparent substrate 5 of the liquid crystal display cell on which the transparent electrode 51 is not formed, and it is rubbed with a nylon brush. Following this, a liquid crystal macromolecular film 3 approximately 6 µm thick is formed by applying a liquid crystal macromolecular solution (18% solids concentration) prepared by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, with a bar coater 21 and heating it to evaporate the solvent. Next, the transparent substrate 5 of the liquid crystal display cell, which is equipped with an optical anisotropic element having a twist orientation 230 degrees to the right and produced by heating the element for three hours at 80° C to perform orientation and then quickly cooling it, is obtained. Further, a plastic substrate 120 µm thick is formed as a protective film 4. Next, a liquid crystal orientation film 52 is formed on the surface of the transparent substrate 5 of the liquid crystal display cell equipped with this optical anisotropic element on which the optical anisotropic element is not formed. A transparent electrode 51 is patterned and a liquid crystal orientation film formed in a similar manner on the opposing transparent substrate 5 of the liquid crystal display cell, which is separated by spacers 6 and liquid crystal (ZLI4506, Merck Corporation), and the cell is assembled so that the electrodes are at nearly right angles to each other. Each of the axes is disposed in the same manner as in the ninth embodiment. Following this, assembly of the liquid crystal device is completed by connecting the driver for liquid crystal drive and the circuit for liquid crystal drive to the above liquid crystal device and positioning a light source for illumination behind the liquid crystal device. Black-and-white display in this liquid crystal device was confirmed by applying voltages equivalent to ON and OFF voltages. This embodiment yielded a liquid crystal device with the same relationship between contrast and angle of visibility as that shown in FIG. 35.

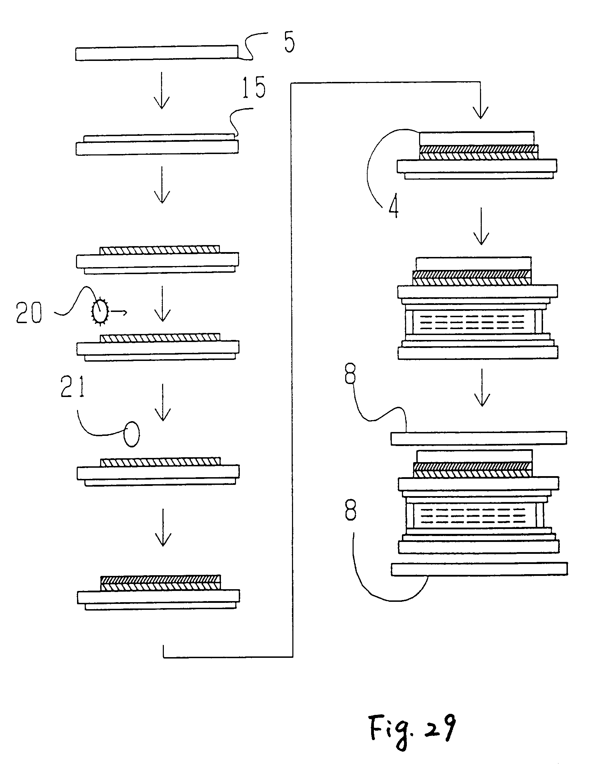

Thirty-eighth embodiment: A schematic representation of an example of the production method for a liquid crystal device equipped with the optical anisotropic element of the invention is shown in FIG. 29. A transparent electrode 51 1,000 Å thick and made from ITO is formed on the transparent substrate 5 of the liquid crystal display cell, and after it has been patterned as prescribed by a photo process, a polyimide thin film 2 is formed on the surface of the transparent substrate 5 of the liquid crystal display cell on which the transparent electrode 51 is not formed, and it is rubbed with a nylon brush. Following this, a liquid crystal macromolecular film 3 approximately 6 µm thick is formed by applying a liquid crystal macromolecular solution (18% solids concentration) prepared by adding CB-15 (37), an optically active compound produced by Merck Corporation and having an asymmetrical center, to a concentration of 5% to a 90%:10% mixture of the side-chain liquid crystal macromolecules (3) and (2) shown above, which have a siloxane chain as a skeleton and demonstrate a nematic phase, with a bar coater 21 and heating it to evaporate the solvent. Next, the transparent substrate 5 of the liquid crystal display cell, which is equipped with an optical anisotropic element having a twist orientation 230 degrees to the right and produced by heating the element for three hours at 80° C to perform orientation and then quickly cooling it, is obtained. Further, a protective film 4 is formed by applying a water-based acrylic resin. Next, a liquid crystal orientation film 52 is formed on the surface of the transparent substrate 5 of the liquid crystal display cell equipped with this optical anisotropic element on which the optical anisotropic element is not formed. A transparent electrode 51 is patterned and a liquid crystal orientation film formed in a similar manner on the opposing transparent substrate 5 of the liquid crystal display cell, which is separated by spacers 6 and liquid crystal (ZLI4506, Merck Corporation), and the cell is assembled so that the electrodes are at nearly right angles to each other. Each of the axes is disposed in the same manner as in the ninth embodiment. Following this, assembly of the liquid crystal device is completed by connecting the driver for liquid crystal drive and the circuit for liquid crystal drive to the above liquid crystal device and positioning a light source for illumination behind the liquid crystal device. Black-and-white display in this liquid crystal device was confirmed by applying voltages equivalent to ON and OFF voltages. This embodiment yielded a liquid crystal device with the same relationship between contrast and angle of visibility as that shown in FIG. 35.

Thirty-ninth embodiment: Liquid crystal devices with the same effect can be obtained when a spin-coat method is used as the application method for the liquid crystal macromolecules in the fourteenth to the thirty-eighth embodiments.

Fortieth embodiment: Liquid crystal devices with the same effect can be obtained when a printing method is used as the application method for the liquid crystal macromolecules in the fourteenth to the thirty-eighth embodiments.

Forty-first embodiment: Liquid crystal devices with the same effect can be obtained when a roll coater is used as the application method for the liquid crystal macromolecules in the fourteenth to the thirty-eighth embodiments.

Forty-second embodiment: The same effect can be obtained in the embodiments of the invention when a macromolecular material with viscosity is used as the protective film.

Forty-third embodiment: The same effect can be obtained in the embodiments of the invention when an adhesive with viscosity is used as the protective film and a macromolecular film is applied on top of that.

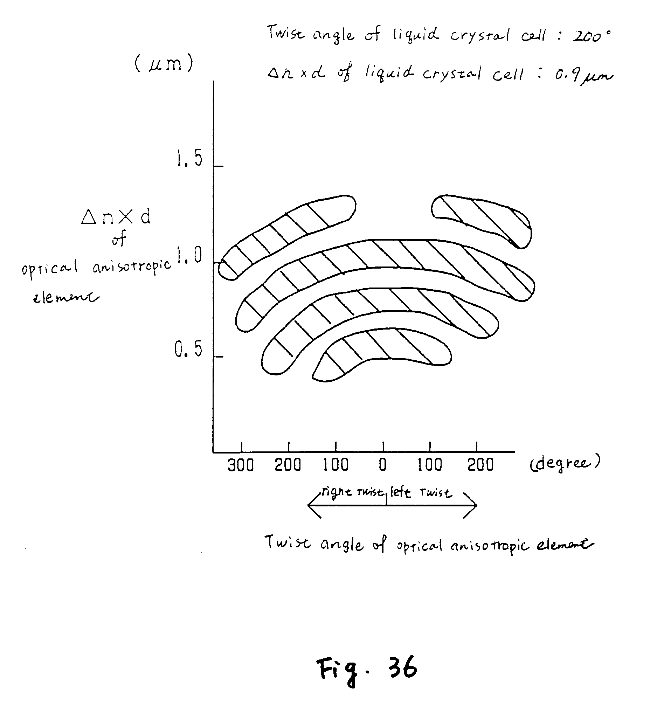

Forty-fourth embodiment: Assuming the twist angle 15 is 200 degrees, Δnd is 0.9 µm, angle 16 is approximately 90 degrees and angles 17 and 18 range from 30 to 60 degrees in the liquid crystal display cell in FIG. 5, when the twist angle 19 and Δnd of the optical anisotropic element have the relationship depicted by the hatched area in FIG. 36, then liquid crystal devices with the same optical characteristics as the fifth embodiment can be obtained in the embodiments of the invention.

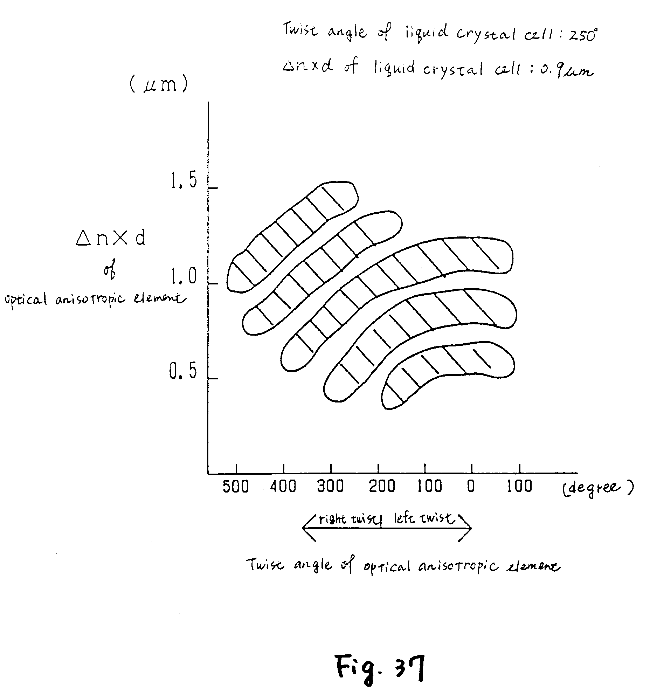

Forty-fifth embodiment: Assuming the twist angle 15 is 250 degrees, Δnd is 0.9 µm, angle 16 is approximately 90 degrees and angles 17 and 18 range from 30 to 60 degrees in the liquid crystal display cell in FIG. 5, when the twist angle 19 and Δnd of the optical anisotropic element have the relationship depicted by the hatched area in FIG. 37, then liquid crystal devices with the same optical characteristics as the fifth embodiment can be obtained in the embodiments of the invention.

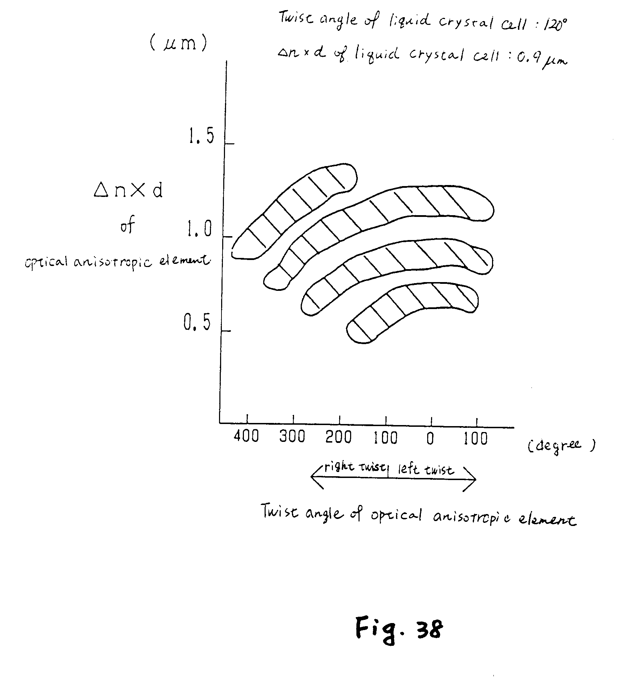

Forty-sixth embodiment: Assuming the twist angle 15 is 120 degrees, Δnd is 0.9 µm, angle 16 is approximately 90 degrees and angles 17 and 18 range from 30 to 60 degrees in the liquid crystal display cell in FIG. 5, when the twist angle 19 and Δnd of the optical anisotropic element have the relationship depicted by the hatched area in FIG. 38, then liquid crystal devices with the same optical characteristics as the fifth embodiment can be obtained in the embodiments of the invention.

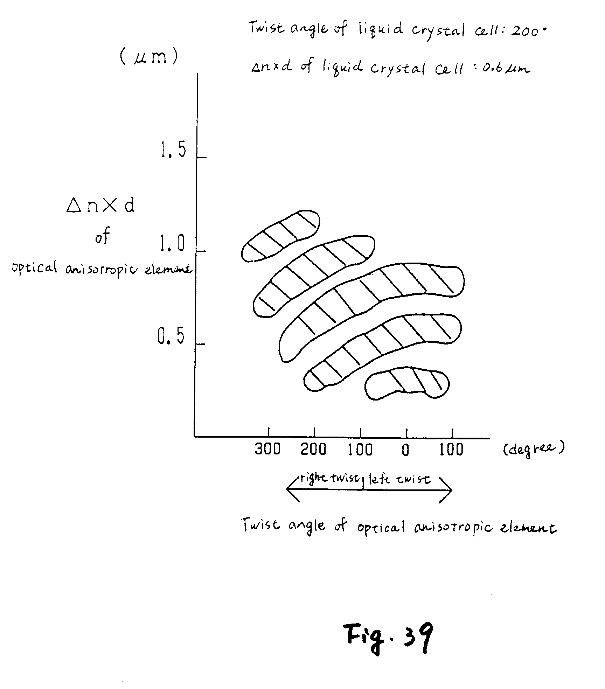

Forty-seventh embodiment: Assuming the twist angle 15 is 200 degrees, Δnd is 0.6 µm, angle 16 is approximately 90 degrees and angles 17 and 18 range from 30 to 60 degrees in the liquid crystal display cell in FIG. 5, when the twist angle 19 and Δnd of the optical anisotropic element have the relationship depicted by the hatched area in FIG. 39, then liquid crystal devices with the same optical characteristics as the fifth embodiment can be obtained in the embodiments of the invention.

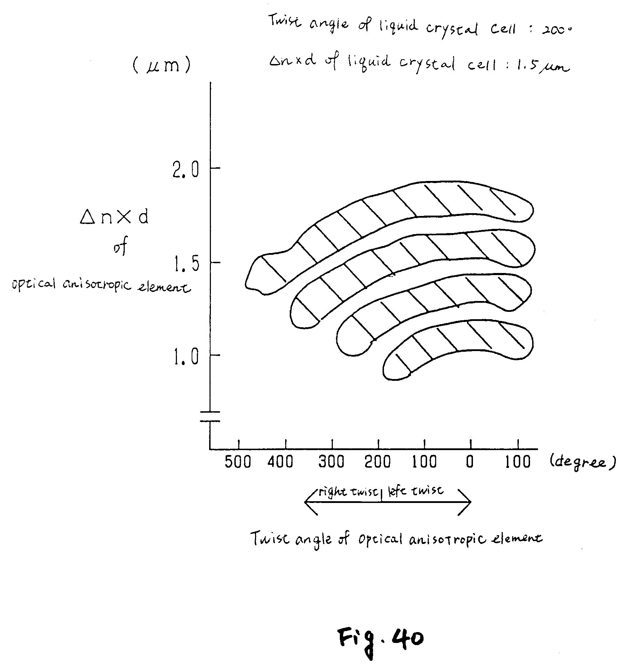

Forty-eighth embodiment: Assuming the twist angle 15 is 200 degrees, Δnd is 1,5 µm, angle 16 is approximately 90 degrees and angles 17 and 18 range from 30 to 60 degrees in the liquid crystal display cell in FIG. 5, when the twist angle 19 and Δnd of the optical anisotropic element have the relationship depicted by the hatched area in FIG. 40, then liquid crystal devices with the same optical characteristics as the fifth embodiment can be obtained in the embodiments of the invention.

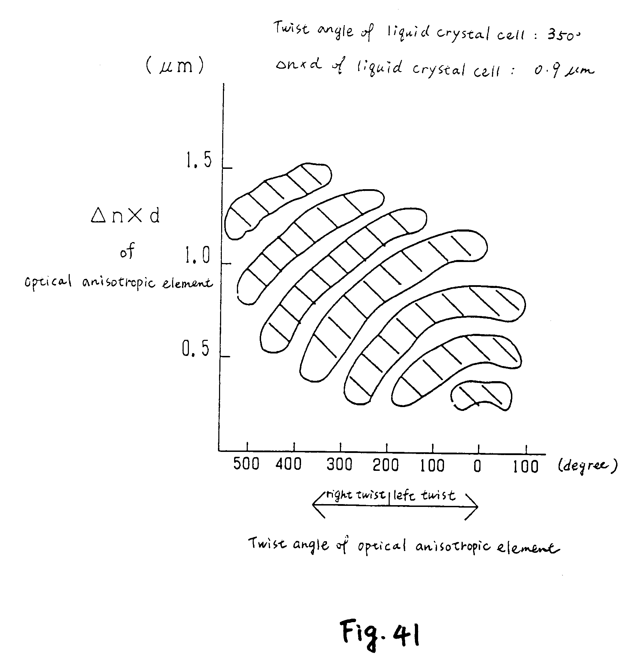

Forty-ninth embodiment: Assuming the twist angle 15 is 350 degrees, Δnd is 0.9 µm, angle 16 is approximately 90 degrees and angles 17 and 18 range from 30 to 60 degrees in the liquid crystal display cell in FIG. 5, when the twist angle 19 and Δnd of the optical anisotropic element have the relationship depicted by the hatched area in FIG. 41, then liquid crystal devices with the same optical characteristics as the fifth embodiment can be obtained in the embodiments of the invention.

### POTENTIAL FOR USE IN INDUSTRY

By means of the invention, not only can liquid crystal devices with superior display performance be produced at low cost, but it also facilitates the supply of liquid crystal displays, light modulating elements, liquid crystal televisions and liquid crystal shutters that accommodate the trend toward greater compactness and lighter weight.

## Claims

1. An optical anisotropic element comprising at least a transparent substrate and at least one liquid crystal macromolecular layer, wherein the liquid crystal macromolecular layer contains liquid crystal macromolecules with a siloxane chain as a skeleton.

2. An optical anisotropic element comprising at least a transparent substrate and at least one liquid crystal macromolecular layer, wherein the liquid crystal macromolecular layer contains liquid crystal macromolecules with an acrylic chain as a skeleton.

3. An optical anisotropic element comprising at least a transparent substrate and at least one liquid crystal macromolecular layer, wherein the liquid crystal macromolecular layer contains liquid crystal macromolecules with a methacrylic chain as a skeleton.

4. The optical anisotropic elements of claims 1, 2 and 3, wherein the liquid crystal macromolecules demonstrate a nematic phase and are uniaxially oriented.

5. The optical anisotropic elements of claims 1, 2 and 3, wherein the liquid crystal macromolecular layer contains a low molecular optically active compound and has a twisted orientation with a spiral axis in the normal direction of the substrate.

6. The optical anisotropic elements of claims 1, 2 and 3, wherein the liquid crystal macromolecular layer contains a polymer with an optically active position and has a twisted orientation with a spiral axis in the normal direction of the substrate.

7. The optical anisotropic elements of claims 1, 2, 3, 4, 5 and 6, wherein the liquid crystal macromolecular layer contains liquid crystal macromolecules with a glass transition temperature.

8. The optical anisotropic elements of claims 1, 2, 3, 4, 5, 6 and 7, wherein there is a protective film on the liquid crystal macromolecular layer.

9. A liquid crystal device equipped with the optical anisotropic element of claim 1, 2, 3, 4, 5, 6, 7 or 8 and the liquid crystal device comprises at least one pair of polarizing plates, a liquid crystal display cell, a transparent substrate and an optical anisotropic element having at least one liquid crystal macromolecular layer, wherein all are sandwiched between the polarizing plates.

10. A liquid crystal device comprising at least one pair of polarizing plates, a liquid crystal display cell and an optical anisotropic element having at least one liquid crystal macromolecular layer, wherein the liquid crystal macromolecular layer contains liquid crystal macromolecules having a siloxane chain as a skeleton and the liquid crystal macromolecular layer is disposed next to the liquid crystal display cell with an orientation film between them.

11. A liquid crystal device comprising at least one pair of polarizing plates, a liquid crystal display cell and an optical anisotropic element having at least one liquid crystal macromolecular layer, wherein the liquid crystal macromolecular layer contains liquid crystal macromolecules having an acrylic chain as a skeleton and the liquid crystal macromolecular layer is disposed next to the liquid crystal display cell with an orientation film between them.

12. A liquid crystal device comprising at least one pair of polarizing plates, a liquid crystal display cell and an optical anisotropic element having at least one liquid crystal macromolecular layer, wherein the liquid crystal macromolecular layer contains liquid crystal macromolecules having a methacrylic chain as a skeleton and the liquid crystal macromolecular layer is disposed next to the liquid crystal display cell with an orientation film between them.

13. A liquid crystal device comprising at least one pair of polarizing plates, a liquid crystal display cell and an optical anisotropic element having at least one liquid crystal macromolecular layer, wherein the liquid crystal macromolecular layer contains liquid crystal macromolecules having a siloxane chain as a skeleton and the liquid crystal macromolecular layer is disposed next to the liquid crystal display cell.

14. A liquid crystal device comprising at least one pair of polarizing plates, a liquid crystal display cell and an optical anisotropic element having at least one liquid crystal macromolecular layer, wherein the liquid crystal macromolecular layer contains liquid crystal macromolecules having an acrylic chain as a skeleton and the liquid crystal macromolecular layer is disposed next to the liquid crystal display cell.

15. A liquid crystal device comprising at least one pair of polarizing plates, a liquid crystal display cell and an optical anisotropic element having at least one liquid crystal macromolecular layer, wherein the liquid crystal macromolecular layer contains liquid crystal macromolecules having a methacrylic chain as a skeleton and the liquid crystal macromolecular layer is disposed next to the liquid crystal display cell.

16. A liquid crystal device equipped with the optical anisotropic element of claim 10, 11, 12, 13, 14 or 15, wherein the liquid crystal macromolecules demonstrate a nematic phase and are uniaxially oriented.

17. A liquid crystal device equipped with the optical anisotropic element of claim 10, 11, 12, 13, 14 or 15, wherein the liquid crystal macromolecular layer contains a low molecular optically active compound and has a twisted orientation with a spiral axis in the normal direction of the substrate.

18. A liquid crystal device equipped with the optical anisotropic element of claim 10, 11, 12, 13, 14 or 15, wherein the liquid crystal macromolecular layer contains a polymer with an optically active position and has a twisted orientation with a spiral axis in the normal direction of the substrate.

19. A liquid crystal device equipped with the optical anisotropic element of claim 10, 11, 12, 13, 14, 15, 16, 17 or 18, wherein the liquid crystal macromolecular layer contains liquid crystal macromolecules with a glass transition temperature.

20. A liquid crystal device equipped with the optical anisotropic element of claim 10, 11, 12, 13, 14, 15, 16, 17, 18 or 19, wherein there is a protective film on the liquid crystal macromolecular layer.

21. A production method for the optical anisotropic element of claim 1, 2, 3, 4, 5, 6, 7, 8 or 9, wherein the production method for the optical anisotropic element, which comprises at least a transparent substrate and at least one liquid crystal macromolecular layer, includes a process that forms the layer containing the liquid crystal macromolecules, a process that orients the layer containing the liquid crystal macromolecules by heating it, and a process that quickly cools the layer.

22. A production method for a liquid crystal device equipped with the optical anisotropic element of claim 10, 11, 12, 13, 14, 15, 16, 17, 18, 19 or 20, wherein the production method for the liquid crystal device equipped with the optical anisotropic element, which comprises at least one pair of polarizing plates and at least one liquid crystal macromolecular layer, includes a process that forms a layer containing at least liquid crystal macromolecules on the surface not in contact with the liquid crystal of the liquid crystal display cell, a process that orients the layer containing the liquid crystal macromolecules by heating it, and a process that quickly cools the layer.

23. A liquid crystal device equipped with the optical anisotropic element of claim 9, 10, 11, 12, 13, 14, 15, 16, 17, 18, 19, 20, 21 or 22 and a production method for the liquid crystal device equipped with the optical anisotropic element, wherein the angle formed by the direction of the polarization axis of the polarizing plates and the direction of the major axis of the liquid crystal macromolecules adjacent to the polarizing plates is from 30 to 60 degrees.

24. A liquid crystal device equipped with the optical anisotropic element of claim 9, 10, 11, 12, 13, 14, 15, 16, 17, 18, 19, 20, 21 or 22 and a production method for the liquid crystal device equipped with the optical anisotropic element, wherein the value for Δn x d of the nematic layer of the liquid crystal display cell is from 0.5 to 1.8 µm.

25. A liquid crystal device equipped with the optical anisotropic element of claim 9, 10, 11, 12, 13, 14, 15, 16, 17, 18, 19, 20, 21 or 22 and a production method for the liquid crystal device equipped with the optical anisotropic element, wherein the twist angle of the liquid crystal macromolecular layer contained in the optical anisotropic element is from -550 to 300 degrees.

26. A liquid crystal device equipped with the optical anisotropic element of claim 9, 10, 11, 12, 13, 14, 15, 16, 17, 18, 19, 20, 21 or 22 and a production method for the liquid crystal device equipped with the optical anisotropic element, wherein the value for Δn x d of the liquid crystal macromolecular layer contained in the optical anisotropic element is from 0.25 to 21.8 µm.

27. A liquid crystal device equipped with the optical anisotropic element of claim 9, 10, 11, 12, 13, 14, 15, 16, 17, 18, 19, 20, 21 or 22 and a production method for the liquid crystal device equipped with the optical anisotropic element, wherein the direction of orientation of the liquid crystal molecules at the surface where the nematic liquid crystal of the liquid crystal display cell opposes the liquid crystal macromolecules contained in the optical anisotropic element is approximately 90 degrees.

28. A liquid crystal device equipped with the optical anisotropic element of claim 9, 10, 11, 12, 13, 14, 15, 16, 17, 18, 19, 20, 21 or 22 and a production method for the liquid crystal device equipped with the optical anisotropic element, wherein the liquid crystal layer of the liquid crystal display cell is in an oriented nematic phase or a cholesteric phase.

29. A liquid crystal device equipped with the optical anisotropic element of claim 28 and a production method for the liquid crystal device equipped with the optical anisotropic element, wherein the direction of the twist of the liquid crystal macromolecules contained in the optical anisotropic element and the direction of twist of the nematic liquid crystal of the liquid crystal display cell are opposite.

30. A liquid crystal device equipped with the optical anisotropic element of claim 28 and a production method for the liquid crystal device equipped with the optical anisotropic element, wherein the twist angle and Δn x d of the liquid crystal macromolecular layer contained in the optical anisotropic element and the nematic liquid crystal of the liquid crystal display cell are nearly equal.
